# EUROPEAN PATENT SPECIFICATION

(11) **EP 4 508 887 B1**
(45) Date of publication and mention of the grant of the patent: **18.02.2026**
(21) Application number: 22732020.7
(22) Date of filing: 20.05.2022
(51) Int. Cl.: H04W 12/06, H04W 12/037

(54) **REGISTERING WITH A MOBILE NETWORK AFTER A FIRST AUTHENTICATION WITH A WLAN ACCESS NETWORK**
REGISTRIERUNG MIT EINEM MOBILEN NETZWERK NACH EINER ERSTEN AUTHENTIFIZIERUNG MIT EINEM WLAN-ZUGANGSNETZWERK
ENREGISTREMENT AUPRÈS D'UN RÉSEAU MOBILE APRÈS UNE PREMIÈRE AUTHENTIFICATION AUPRÈS D'UN RÉSEAU D'ACCÈS WLAN

(30) Priority: 14.04.2022 GR 20220100323
(43) Date of publication of application: 19.02.2025
(73) Proprietor: Lenovo (Singapore) Pte. Ltd., Singapore 556741 (SG)
(72) Inventor: SALKINTZIS, Apostolis, 15354 Athens (GR); KUNZ, Andreas, 68526 Ladenburg (DE); BASKARAN, Sheeba Backia Mary, 61381 Friedrichsdorf (DE)
(74) Representative: Openshaw & Co.
(86) International application number: PCT/EP2022/063810
(87) International publication number: WO 2023/198297

(56) References cited:
- HUAWEI ET AL: "NSWO and N3GPP access support", vol. SA WG2, no. e-meeting; 20220406 - 20220412, 29 March 2022 (2022-03-29), XP052133490, Retrieved from the Internet <URL:https://ftp.3gpp.org/tsg_sa/WG2_Arch/TSGS2_150E_Electronic_2022-04/Docs/S2-2202655.zip S2-2202655 NSWO R17 discussion.docx> [retrieved on 20220329]
- HUAWEI: "23.501: NSWO and N3GPP access support", vol. SA WG2, no. e-meeting; 20220406 - 20220412, 29 March 2022 (2022-03-29), XP052133512, Retrieved from the Internet <URL:https://ftp.3gpp.org/tsg_sa/WG2_Arch/TSGS2_150E_Electronic_2022-04/Docs/S2-2202677.zip S2-2202677 23501 NSWO CR.docx> [retrieved on 20220329]
- "3rd Generation Partnership Project; Technical Specification Group Services and System Aspects; Study on Non-Seamless WLAN Offload (NSWO) in 5G System (5GS) using 3GPP credentials (Release 17)", no. V17.1.0, 24 March 2022 (2022-03-24), pages 1 - 21, XP052144815, Retrieved from the Internet <URL:https://ftp.3gpp.org/Specs/archive/33_series/33.881/33881-h10.zip 33881-h10.docx> [retrieved on 20220324]
- "3rd Generation Partnership Project; Technical Specification Group Services and System Aspects; Procedures for the 5G System (5GS); Stage 2 (Release 17)", vol. SA WG2, no. V17.4.0, 23 March 2022 (2022-03-23), pages 1 - 738, XP052144761, Retrieved from the Internet <URL:https://ftp.3gpp.org/Specs/archive/23_series/23.502/23502-h40.zip 23502-h40.docx> [retrieved on 20220323]

## Description

### FIELD

The subject matter disclosed herein relates generally to wireless communications and more particularly relates to registering with a fifth generation ("5G") network after an authentication with a Wireless Local Area Network ("WLAN") Access Network ("AN").

### BACKGROUND

Non-Seamless WLAN Offload ("NSWO") is an optional capability of a User Equipment ("UE") (which may also be referred to as a UE apparatus) supporting radio access to a WLAN. A UE supporting non-seamless WLAN offload may, while connected to a WLAN AN, route specific Internet Protocol ("IP") flows via the WLAN AN without traversing the Third Generation Partnership Project ("3GPP") core network.

Huawei et al, "NSWO and N3GPP access support", S2-2202655, 3GPP TSG-WG SA2 Meeting #150E e-meeting, Elbonia, April 6 - 12, 2022, is a contribution to address the support of roaming, the connection to WLAN access network for NSWOF and the subsequent access to WLAN as untrusted and trusted network.

Huawei, "23.501: NSWO and N3GPP access support", S2-2202677, 3GPP TSG-WG SA2 Meeting #150E e-meeting, Elbonia, April 6 - 12, 2022, is a change request to address a number of issues concerning 3GPP TS 23.501 "Technical Specification Group Services and System Aspects; System architecture for the 5G System (5GS)" and NSWO and N3GPP access support.

3GPP TR 33.881 V17.1.0 (2022-03), "Technical Specification Group Services and System Aspects; Study on Non-Seamless WLAN Offload (NSWO) in 5G System (5GS) using 3GPP credentials (Release 17)", studies the security procedures necessary to support NSWO in 5GS maintaining security and privacy of users and 5GS network nodes.

3GPP TS 23.502 V17.4.0 (2022-03), "3rd Generation Partnership Project; Technical Specification Group Services and System Aspects; Procedures for the 5G System (5GS); Stage 2 (Release 17)", defines the Stage 2 procedures and Network Function Services for the 5G system architecture which is described in the TS 23.501 and for the policy and charging control framework which is described in TS 23.503.

### BRIEF SUMMARY

Disclosed are procedures for registering with a core network after NSWO authentication. Said procedures may be implemented by apparatus, systems, methods, or computer program products. The invention is defined by the appended independent claims.

One method at a UE includes connecting to a WLAN AN using credentials associated with a mobile communication network, where connecting to the WLAN AN includes performing a first authentication procedure between the UE and the mobile communication network, where the first authentication procedure does not register the UE with the mobile communication network. The method includes determining to register with the mobile communication network after connecting to the WLAN AN and sending a first message including a first container, where the first container is derived based on information generated during the first authentication procedure, and where the first message initiates registration with the mobile communication network. The method includes receiving a second message including a second container, where the second container is derived based on the information generated during the first authentication procedure. The method includes validating the second container. The method includes registers with the mobile communication network based on validating the second container. The method ends.

One method at an authentication function (e.g., AUSF) includes performing a first authentication procedure between a UE and the authentication function, where the first authentication procedure does not register the UE with the mobile communication network. The method includes receiving a first message including a first container, where the first container is derived based on information generated during the first authentication procedure, and where the first message is sent to register the UE with the mobile communication network. The second method includes validating the first container and transmitting a second message including a second container based on validating the first container, where the container is derived based on the information generated during the first authentication procedure. The method includes registering the UE with the mobile communication network.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a block diagram illustrating one embodiment of a wireless communication system for registering with a core network after NSWO authentication;
Figure 2A is a call-flow diagram illustrating one embodiment of a procedure for registering with a core network after connecting to an untrusted non-3GPP AN;
Figure 2B is a continuation of the call-flow diagram of Figure 2A;
Figure 2C is a continuation of the call-flow diagrams of Figures 2A and 2B;
Figure 3A is a call-flow diagram illustrating one embodiment of a procedure for registering with a core network after connecting to a trusted non-3GPP AN;
Figure 3B is a continuation of the call-flow diagram of Figure 3A;
Figure 3C is a continuation of the call-flow diagrams of Figures 3A and 3B;
Figure 4 is a block diagram illustrating one embodiment of a UE apparatus that may be used for registering with a core network after NSWO authentication;
Figure 5 is a block diagram illustrating one embodiment of a network apparatus that may be used for registering with a core network after NSWO authentication; and
Figure 6 is a flowchart diagram illustrating one embodiment of a method for registering with a core network after NSWO authentication; and
Figure 7 is a flowchart diagram illustrating another embodiment of a method for registering with a core network after NSWO authentication.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), WLAN, or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The call-flow diagrams, flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the call-flow, flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for registering with a core network after NSWO authentication. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

Non-seamless WLAN offload ("NSWO") is an optional capability of a UE supporting WLAN radio access, where the UE may, while connected to a WLAN AN, route specific IP flows via the WLAN AN without traversing the 3GPP core network. The IP traffic of the UE is directly offloaded to the WLAN AN and does not traverse the 5G core ("5GC") network. The 5GC network is only used for authenticating the UE and authorizing its connection to the WLAN AN.

Various 3GPP network may support WLAN connection using 5G credentials without 5GS registration, i.e., enabling a UE to connect to a WLAN AN using its 5G credentials without the UE registering with a 5GC network. Afterwards, the UE is connected to the WLAN AN and can use this WLAN AN for initiating IP communication.

However, when the UE has connected to a WLAN AN using its 5G credentials without registering to the 5GC, and later desires to register to the 5GC, currently 3GPP standards require the UE to again authenticates itself when registering to the 5GC. Yet, this is inefficient as the UE has already authenticated itself using its 5G credentials when connecting to the WLAN AN.

This disclosure addresses this issue and defines novel modifications to the "5G registration via non-3GPP access" procedure, wherein the primary authentication is skipped if both the UE and the 5GC network have successfully conducted a prior NSWO authentication procedure (thus, they both hold the same security keys generated by this procedure). In other words, the present disclosure defines methods that optimize the UE registration with the 5GC network, when the UE and the 5GC network have already conducted a successful NSWO authentication procedure. Such optimizations can reduce the signaling load and the processing requirements in the UE and in the 5GC network.

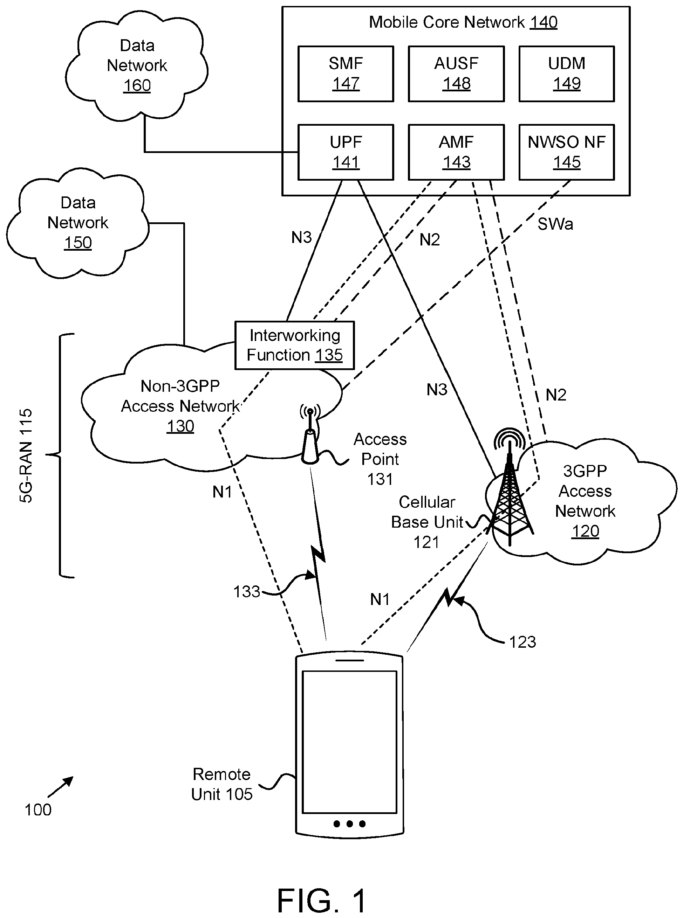

Figure 1 depicts a wireless communication system 100 for registering with a core network after NSWO authentication, according to embodiments of the disclosure. In one embodiment, the wireless communication system 100 includes at least one remote unit 105, a 5G-RAN 115, and a mobile core network 140. The 5G-RAN 115 and the mobile core network 140 form a mobile communication network. The 5G-RAN 115 may be composed of a 3GPP access network 120 containing at least one cellular base unit 121 and/or a non-3GPP access network 130 containing at least one access point 131. The remote unit communicates with the 3GPP access network 120 using 3GPP communication links 123 and communicates with the non-3GPP access network 130 using non-3GPP communication links 133.

Even though a specific number of remote units 105, 3GPP access networks 120, cellular base units 121, 3GPP communication links 123, non-3GPP access networks 130, access points 131, non-3GPP communication links 133, and mobile core networks 140 are depicted in Figure 1, one of skill in the art will recognize that any number of remote units 105, 3GPP access networks 120, cellular base units 121, 3GPP communication links 123, non-3GPP access networks 130, access points 131, non-3GPP communication links 133, and mobile core networks 140 may be included in the wireless communication system 100.

In one implementation, the 3GPP access network 120 is compliant with the Fifth-Generation ("5G") system specified in the Third Generation Partnership Project ("3GPP") specifications. In another implementation, the 3GPP access network 120 is compliant with the LTE system specified in the 3GPP specifications. For example, the 3GPP access network 120 may comprise a New Generation Radio Access Network ("NG-RAN"), implementing New Radio ("NR") Radio Access Technology ("RAT") and/or Long-Term Evolution ("LTE") RAT. Moreover, the non-3GPP access network 130 may comprise a non-3GPP RAT (e.g., Wi-Fi^{®} or Institute of Electrical and Electronics Engineers ("IEEE") 802.11-family compliant WLAN).

More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like.

Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the cellular base units 121 in the 3GPP access network 120 via uplink ("UL") and downlink ("DL") communication signals. The UL and DL communication signals may be carried over the 3GPP communication links 123. Furthermore, the UL communication signals may comprise one or more uplink channels, such as the Physical Uplink Control Channel ("PUCCH") and/or Physical Uplink Shared Channel ("PUSCH"), while the DL communication signals may comprise one or more downlink channels, such as the Physical Downlink Control Channel ("PDCCH") and/or Physical Downlink Shared Channel ("PDSCH"). Similarly, the remote units 105 may communicate with one or more access points 131 in the non-3GPP access network(s) 130 via UL and DL communication signals carried over the non-3GPP communication links 133. Here, the access networks 120 and 130 are intermediate networks that provide the remote units 105 with access to the mobile core network 140.

In some embodiments, the remote units 105 communicate with a remote host (e.g., an application server) in the packet data network 150 via a network connection with the mobile core network 140. For example, an application (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via an access network in the 5G-RAN 115 (i.e., the 3GPP access network 120 and/or the non-3GPP access network 130). The mobile core network 140 then relays traffic between the remote unit 105 and the remote host using the PDU session.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

As used herein, Protocol Data Units ("PDUs") refer to packets exchanged between peer entities in the same layer (e.g., of a protocol stack). In the context of a 5G system ("5GS"), the term "PDU Session" refers to a data connection that provides end-to-end ("E2E") user plane ("UP") connectivity between the remote unit 105 and a specific Data Network ("DN") through the User Plane Function ("UPF") 141. The PDU session represents a logical connection between the remote unit 105 and the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a PDN Gateway ("PGW," not shown) in the mobile core network 140. In certain embodiments, there is a one-to-one mapping between an EPS Bearer and a QoS profile, such that all packets belonging to a specific EPS Bearer have the same QoS Class Identifier ("QCI").

The cellular base units 121 may be distributed over a geographic region. In certain embodiments, a cellular base unit 121 may also be referred to as a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The cellular base units 121 are generally part of a RAN, such as the 3GPP access network 120, that may include one or more controllers communicably coupled to one or more corresponding cellular base units 121. These and other elements of radio access network are not illustrated but are well known generally by those having ordinary skill in the art. The cellular base units 121 connect to the mobile core network 140 via the 3GPP access network 120.

The cellular base units 121 may serve a number of remote units 105 within a serving area, for example, a cell or a cell sector, via a wireless communication link 123. The cellular base units 121 may communicate directly with one or more of the remote units 105 via communication signals. Generally, the cellular base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the cellular base units 121.

Note that during NR operation on unlicensed spectrum (referred to as "NR-U"), the cellular base unit 121 and the remote unit 105 communicate over unlicensed (i.e., shared) radio spectrum. Similarly, during LTE operation on unlicensed spectrum (referred to as "LTE-U"), the cellular base unit 121 and the remote unit 105 also communicate over unlicensed (i.e., shared) radio spectrum.

The non-3GPP access networks 130 may be distributed over a geographic region. Each non-3GPP access network 130 may serve a number of remote units 105 with a serving area. An access point 131 in a non-3GPP access network 130 may communicate directly with one or more remote units 105 by receiving UL communication signals and transmitting DL communication signals to serve the remote units 105 in the time, frequency, and/or spatial domain. Both DL and UL communication signals are carried over the non-3GPP communication links 133. The 3GPP communication links 123 and non-3GPP communication links 133 may employ different frequencies and/or different communication protocols. In various embodiments, an access point 131 may communicate using unlicensed radio spectrum. The mobile core network 140 may provide services to a remote unit 105 via the non-3GPP access networks 130, as described in greater detail herein.

In some embodiments, a non-3GPP access network 130 connects to the mobile core network 140 via an interworking entity 135. The interworking entity 135 provides interworking between the remote unit 105 and the mobile core network 140. In some embodiments, the interworking entity 135 is a Non-3GPP Interworking Function ("N3IWF") and, in other embodiments, it is a Trusted Non-3GPP Gateway Function ("TNGF"). The N3IWF supports the connection of "untrusted" non-3GPP access networks to the mobile core network (e.g., 5GC), whereas the TNGF supports the connection of "trusted" non-3GPP access networks to the mobile core network. The interworking entity 135 supports connectivity to the mobile core network 140 via the "N2" and "N3" interfaces, and it relays "N1" signaling between the remote unit 105 and the AMF 143. Both the 3GPP access network 120 and the interworking entity 135 communicate with the AMF 143 using a "N2" interface. The interworking entity 135 also communicates with the UPF 141 using a "N3" interface.

In certain embodiments, a non-3GPP access network 130 may be controlled by an operator of the mobile core network 140 and may have direct access to the mobile core network 140. Such a non-3GPP AN deployment is referred to as a "trusted non-3GPP access network." A non-3GPP access network 130 is considered as "trusted" when it is operated by the 3GPP operator, or a trusted partner, and supports certain security features, such as strong air-interface encryption. In contrast, a non-3GPP AN deployment that is not controlled by an operator (or trusted partner) of the mobile core network 140, does not have direct access to the mobile core network 140, or does not support the certain security features is referred to as a "non-trusted" non-3GPP access network. Note that, for simplicity, the interworking entity 135 is shown as part of the non-3GPP access network 130; however, while the TNGF is part of a "trusted" non-3GPP access network, the N3IWF is typically considered as part of the mobile core network 140.

In various embodiments, the remote units 105 may communicate with a remote host (e.g., an application server) in the Data Network 160 directly via the non-3GPP access network 130 (i.e., without any connection with the mobile core network 140), referred to as "non-seamless WLAN offload". A remote unit 105 supporting non-seamless WLAN offload may, while connected to a non-3GPP access network 130, routes specific IP flows via the non-3GPP access network 130 without traversing the mobile core network 140.

In various embodiments, the remote unit 105 may connect to the non-3GPP access network 130 using its 5G credentials. In one embodiment, the remote unit 105 connects to the non-3GPP access network 130 using its 5G credentials during a 5GS registration procedure, e.g., where the remote unit 105 registers with the mobile core network 140 using NAS signaling via the non-3GPP access network 130. However, in another embodiment the remote unit 105 may connect to the non-3GPP access network 130 using its 5G credentials but without performing a 5GS registration procedure to the mobile core network 140.

The interworking entity 135 (e.g., TNGF or N3IWF) is utilized when the remote unit 105 later decides to register with the mobile core network 140 via the non-3GPP access network 130. The present disclosure defines methods that optimize this registration with the mobile core network 140. After the remote unit 105 registers with the mobile core network 140 via the non-3GPP access network 130, as defined in this disclosure, the remote unit 105 can exchange IP traffic with the Data Network 160, directly via the non-3GPP access network 130, and it can also exchange IP traffic with the Data Network 150, via the interworking entity 135 and the UPF 141.

In one embodiment, the mobile core network 140 is a 5G Core network ("5GC") or an Evolved Packet Core ("EPC"), which may be coupled to a Data Network 150, like the Internet and private data networks, among other data networks. A remote unit 105 may have a subscription or other account with the mobile core network 140. In various embodiments, each mobile core network 140 belongs to a single mobile network operator ("MNO") and/or Public Land Mobile Network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the 5G-RAN 115, a NSWO Network Function ("NSWO NF") 145, a Session Management Function ("SMF") 147, an Authentication Server Function ("AUSF") 148, a Unified Data Management function ("UDM") and a User Data Repository ("UDR"). In some embodiments, the UDM is co-located with the UDR, depicted as combined entity "UDM/UDR" 149. Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network ("DN"), in the 5G architecture. The AMF 143 is responsible for termination of Non-Access Spectrum ("NAS") signaling, NAS ciphering and integrity protection, registration management, connection management, mobility management, access authentication and authorization, security context management.

The NSWO NF, also referred to as NSWO Function ("NSWOF"), interfaces (via the SWa interface) with the non-3GPP access network 130 (e.g., a WLAN AN) and operates as a AAA proxy that interacts with an AUSF 148, e.g., using a Service Based Interface ("SBI"). The NSWO NF 145 provides interworking functionality that enables the communication between the non-3GPP access network 130 and the AUSF 148.

The SMF 147 is responsible for session management (i.e., session establishment, modification, release), remote unit (i.e., UE) Internet Protocol ("IP") address allocation and management, DL data notification, and traffic steering configuration of the UPF 141 for proper traffic routing. The AUSF 148 may act as an authentication server and/or authentication proxy, thereby allowing the AMF 143 to authenticate a remote unit 105.

The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like.

In various embodiments, the mobile core network 140 may also include a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), a Policy Control Function ("PCF") (which is responsible for unified policy framework, providing policy rules to CP functions, access subscription information for policy decisions in UDR), or other NFs defined for the 5GC. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 147 and UPF 141. In some embodiments, the different network slices may share some common network functions, such as the AMF 143. The different network slices are not shown in Figure 1 for ease of illustration, but their support is assumed.

While Figure 1 depicts components of a 5G RAN and a 5G core network, the described embodiments for registering with a core network after NSWO authentication apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 147 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "RAN node" is used for the base station/ base unit, but it is replaceable by any other radio access node, e.g., gNB, ng-eNB, eNB, Base Station ("BS"), Access Point ("AP"), NR BS, 5G NB, Transmission and Reception Point ("TRP"), etc. Additionally, the term "UE" is used for the mobile station/ remote unit, but it is replaceable by any other remote device, e.g., remote unit, MS, ME, etc. Further, the operations are described mainly in the context of 5GNR. However, the below described solutions/methods are also equally applicable to other mobile communication systems supporting registering with a core network after NSWO authentication.

As described above, when a UE (e.g., the remote unit 105) has connected to a WLAN AN by successfully performing the NSWO authentication procedure, and the UE desires to register to 5GC, current 3GPP specification do not allows this registration to be performed without the need to authenticate again the UE. Yet, because the UE has already been authenticated by the 5GC network, it should be possible for the UE to register to 5GC network without conducting another authentication procedure. Disclosed herein are solutions for efficient registration with a 3GPP core network after connecting to a non-3GPP access network and successfully performing a NSWO authentication procedure. Note that the NSWO authentication procedure has been defined to enable the UE to connect to a WLAN AN using its 5G credentials without the UE registering with a 5GC.

The UE is authorized to connect to the WLAN AN after successfully conducting a NSWO authentication procedure, wherein the UE and the AUSF in the 5GC are mutually authenticated. After the UE connects to the WLAN AN using its 5G credentials, the UE can exchange IP traffic with a Data Network directly via the WLAN AN (i.e., non-seamless WLAN offloading of data traffic).

In various embodiments, a UE (remote unit 105) that selects and connects to a WLAN AN using 5G credentials held in the UE (e.g., in a Universal SIM ("USIM") module) and in the mobile core network 140. The UE is authorized to connect to the WLAN AN 120 after successfully conducting a NSWO authentication procedure, wherein the UE and the AUSF 148 in the mobile core network 140 are mutually authenticated.

The NSWO authentication procedure involves the UE (e.g., an embodiment of the remote unit 105), a WLAN AN (e.g., an embodiment of the non-3GPP access network 130), a NSWO NF (e.g., an embodiment of the NSWO NF 145), an AUSF (e.g., an Extensible Authentication Protocol ("EAP") authentication server and one embodiment of the AUSF 148), and a UDM (e.g., one embodiment of the UDM/UDR 149). Note here that the NSWO NF, the AUSF and the UDM are part of a 5GC (e.g., an embodiment of the mobile core network 140).

The NSWO procedure allows for the UE to connect to the WLAN AN using 5G credentials and without 5GS registration. In one embodiment, the WLAN AN may be part of a trusted non-3GPP access network. In another embodiment, the WLAN AN may be part of an untrusted non-3GPP access network.

Note that the WLAN AN must support an SWa interface with the 5GC, which is used during the NSWO authentication procedure. In a typical scenario, before the UE attempts to connect to the WLAN AN using its 5G credentials, the UE discovers that the WLAN AN supports AAA interworking with the 5GC, meaning that it supports a SWa interface with the 5GC.

The step of the NSWO authentication procedure are as follows: at Step 1 the UE establishes a WLAN connection between the UE and the WLAN AN, e.g., using procedures specified in the IEEE 802.11 standards.

At Step 2, the WLAN AN sends an EAP Identity/Request message to the UE.

At Step 3, the UE sends an EAP Response/Identity message (see messaging). In certain embodiments, the EAP Response/Identity message contains a Subscriber Concealed Identifier ("SUCI") of UE, e.g., using the network access identifier ("NAI") format (i.e., username@realm format) as specified in clause 28.7.3 of 3GPP Technical Specification ("TS") 23.003). For example, the UE may construct the SUCI in NAI format with the username part containing an encrypted Mobile Subscriber Identification Number ("MSIN") and the realm part containing the Mobile Country Code and/or Mobile Network Code ("MCC/MNC") of the 5GC.

At Step 4, the WLAN AN routes the EAP Response/Identity message over the SWa interface towards the NSWO NF based on the realm part of the SUCI. Note that the NSWO NF acts as an SBI/AAA proxy between the WLAN AN and the AUSF.

At Step 5, the NSWO NF sends an authentication request message, e.g., the Nausf_UEAuthentication_Authenticate Request message, containing the SUCI, a Serving Network Name (e.g., an Access Network Identity, as defined in 3GPP TS 33.501) and a NSWO indicator towards the AUSF . Here, the indicator NSWO_indicator is used to indicate to the AUSF that the authentication request is for Non-Seamless WLAN Offload purposes.

At Step 6, the AUSF (acting as the EAP authentication server) sends a Nudm_UEAuthentication_Get Request to the UDM, including SUCI and the Serving Network Name and NSWO indicator.

At Step 7, upon reception of the Nudm_UEAuthentication_Get Request, the UDM invokes a Subscriber Identity De-concealing Function ("SIDF") to de-conceal the SUCI to gain the corresponding Subscriber Permanent Identifier ("SUPI") before UDM can process the request. Based on the NSWO indicator, the UDM selects the EAP-AKA' authentication method and generates an authentication vector using the Serving Network Name as the Key Derivation Function ("KDF") input parameter. The UDM includes the EAP-AKA' authentication vector ("AV"), i.e., comprising parameters [RAND, AUTN, XRES, CK' and IK'], and may include SUPI to AUSF in a Nudm _UEAuthentication_Get Response message.

At Step 8, the AUSF stores the expected result ("XRES") parameter for future verification. The AUSF sends the EAP-Request/AKA'-Challenge message to the NSWO NF in a Nausf_UEAuthentication_Authenticate Response message. In certain embodiments, the Serving Network Name is carried in the AT_KDF_INPUT attribute in EAP-AKA', e.g., as defined in Internet Engineering Task Force ("IETF") Request For Comments ("RFC") 5448.

At Step 9, the NSWO NF sends the EAP-Request/AKA'-Challenge message to the WLAN AN 203, e.g., over the SWa interface.

At Step 10, the WLAN AN forwards the EAP-Request/AKA'-Challenge message to the UE 201.

At Step 11, at receipt of the parameters RAND and AUTN in the EAP-Request/AKA'-Challenge message, the UE calculates an authentication response. In some embodiments, the UE calculates the authentication response as described in 3GPP TS 33.501. See, e.g., 3GPP TS 33.501 clause 6.1.3.3, Annex F, and Annex S. In various embodiments, when the UE performs NSWO authentication, the UE does not generate the security key KAUSF.

At Step 12, the UE sends the EAP-Response/AKA'-Challenge message to the WLAN AN.

At Step 13, the WLAN AN forwards the EAP-Response/AKA'-Challenge message over the SWa interface to the NSWO NF.

At Step 14, the NSWO NF sends the Nausf_UEAuthentication_Authenticate Request with EAP-Response/AKA'-Challenge message to the AUSF.

At Step 15, the AUSF verifies if the received response 'RES' matches the stored and expected response 'XRES'. If the verification is successful, then the AUSF continues as follows to Step 16; otherwise, the AUSF returns an error to the NSWO NF.

Based on the NSWO indicator received in Step 5, the AUSF derives the required MSK key from CK' and IK', e.g., as described in 3GPP TS 33.501 Annex F and IETF RFC 5448. In various embodiments, when the AUSF performs NSWO authentication, the AUSF does not generate the security key KAUSF.

At Step 16, the AUSF sends a Nausf_UEAuthentication_Authenticate Response message with EAP-Success and MSK key to the NSWO NF. The AUSF may optionally provide the SUPI to the NSWO NF.

At Step 17a, the NSWO NF sends the EAP-success and MSK to the WLAN AN over the SWa interface.

At Step 17b, the WLAN AN forwards the EAP-Success message to the UE.

Upon receiving the EAP-Success message, the UE derives the MSK as specified in Step 11, if it has not derived the MSK earlier. Further, at Steps 18a and 18b, the UE and WLAN AN independently derive WLAN keys from the PMK. Note that the Pairwise Master Key ("PMK") is derived from the MSK.

At Step 18c, the UE uses the WLAN keys to perform a 4-way handshake to establish a secure connection with the WLAN AN. At Step 18d, the UE and WLAN AN perform local IP configuration. The NSWO authentication procedure ends.

After the NSWO authentication procedure is successfully completed, the UE is connected to the WLAN AN and can use this WLAN for initiating IP communication. The IP traffic of the UE is directly offloaded to the WLAN AN and does not traverse the 5GC network. The 5GC network is only used for authenticating the UE and authorizing its connection to the WLAN AN.

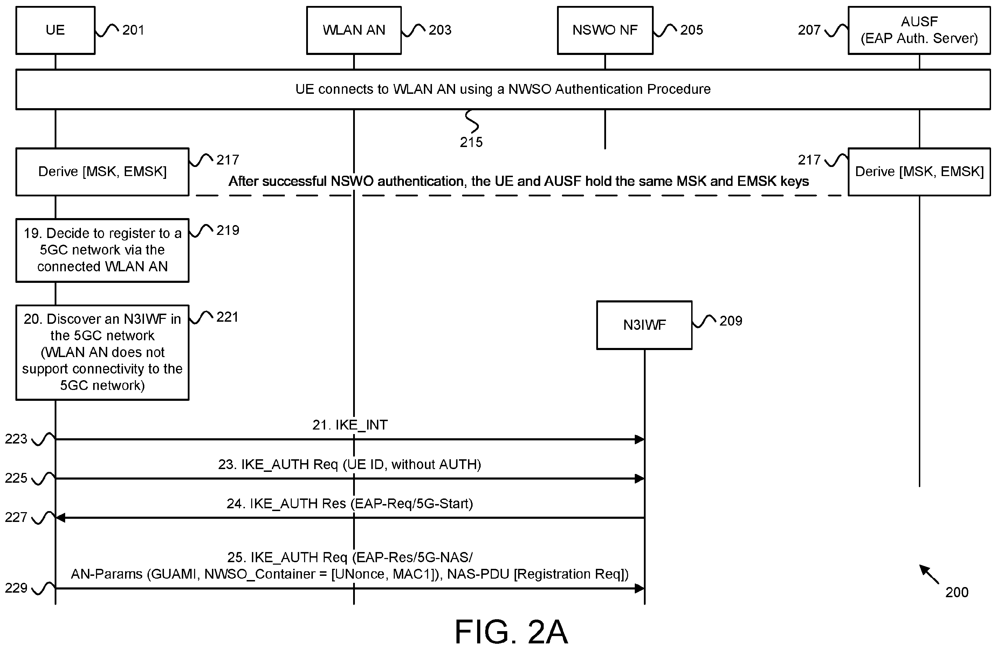

Figures 2A-2C depict a procedure 200 for 5G registration via untrusted non-3GPP access after previously performing NSWO authentication, according to embodiments of the disclosure. The procedure 200 involves a UE 201 (e.g., an embodiment of the remote unit 105), a WLAN AN 203 (e.g., an embodiment of the non-3GPP access network 130), a NSWO NF 205 (e.g., an embodiment of the NSWO NF 145), an AUSF 207 (e.g., an EAP authentication server and one embodiment of the AUSF 148), an N3IWF 209 (e.g., one embodiment of the interworking entity 135), and an AMF 211 (e.g., one embodiment of the AMF 143).

The NSWO NF 205, the AUSF 207, and the AMF 211 are part of a 5GC (e.g., an embodiment of the mobile core network 140). Note that an "untrusted" WLAN AN 203, as considered here, contains one or more access points ("APs") but does not contain N3IWFs, because an N3IWF is typically deployed outside of an untrusted WLAN AN 203. Thus, the N3IWF 209 may be deployed inside the 5GC. It is assumed that the UE 201 has connected to a non-3GPP access network 5G credentials and without 5GS registration, e.g., by performing the NSWO authentication procedure described above.

The procedure 200 comprises modifications to the "5G Registration via Untrusted non-3GPP Access" procedure specified in 3GPP TS 23.502, clause 4.12.2.2, where the modifications allow the UE 201 to register with the 5GC network, but without executing an authentication procedure (aka "primary authentication") since the UE 201 was already authenticated by the AUSF 207 in the 5GC network when the NSWO authentication procedure was performed to enable the UE 201 to connect to the WLAN AN 203.

Starting on Figure 2A, the procedure 200 begins as the UE 201 connects to the WLAN AN 203 using its 5G credentials and the NSWO authentication procedure, e.g., as described above (see block 215). Note that during the NSWO authentication procedure, the UE 201 and the AUSF 207 generate the same Master Session Key ("MSK") and the same Extended Master Session Key ("EMSK") (see blocks 217). Also, during the NSWO authentication procedure, a secure connection is established between the UE 201 and the WLAN AN 203 and the UE 201 can securely exchange data traffic with an external data network, e.g., the data network 160.

Note that the MSK refers to keying material that is derived between the UE 201 (i.e., an EAP peer) and the AUSF (i.e., an EAP server) and exported by the EAP method. The MSK is only used to derive other security keys and in not directly used to protect data and/or signaling messages. In various embodiments, the MSK is derived according to procedures defined in IETF RFC 3748. The EMSK refers to additional keying material derived between the UE 201 (i.e., an EAP client) and the AUSF (i.e., an EAP server) and exported by the EAP method term. The EMSK is only used to derive other root keys and in not directly used to protect data and/or signaling messages. In various embodiments, the MSK is derived according to procedures defined in IETF RFC 5295.

At Step 19, while the UE 201 is connected to the WLAN AN 203, the UE 201 decides to connect to a 5G core ("5GC") network via the WLAN AN 203, e.g., to access a service accessible via the 5GC network, such as IP Multimedia Session ("IMS") services (see block 219).

At Step 20, the UE 201 decides to register to the 5GC network via an N3IWF 209, i.e., by using the registration via untrusted non-3GPP access (see block 221). How the UE 201 takes this decision depends on the UE implementation logic. In one scenario, the UE 201 decides to register via an N3IWF 209 because it determines that the WLAN AN 203 does not support 5G connectivity to the 5GC network. After taking this decision, the UE 201 discovers an N3IWF 209 in the 5GC network using the existing N3IWF selection procedures (see, e.g., 3GPP TS 23.501).

At Step 21, the UE 201 establishes an IPsec Security Association ("SA") with the N3IWF 209, e.g., by initiating an IKE initial exchange ("IKE _INT") according to IETF RFC 7296 (see messaging 223).

At Step 23, the UE 201 initiates an IKE_AUTH exchange by sending an IKE_AUTH request message (see messaging 225). Note that the IKE_AUTH request message contains a UE ID of the UE 201, but does not contain an AUTH payload.

At Step 24, the N3IWF 209 responds with an IKE_AUTH response message, which includes an EAP-Request/5G-Start packet (see messaging 227). The EAP-Request/5G-Start packet triggers the UE 201 to initiate an EAP-5G session, i.e., to start sending NAS messages to the 5GC network encapsulated within EAP-5G packets.

At Step 25, the UE 201 sends an IKE_AUTH request to the N3IWF 209, which includes an EAP-Response/5G-NAS packet that contains the Access Network parameters (AN-Params) and a Registration Request message (see messaging 229). Here, the AN-Params contains information that is used by the N3IWF 209 for selecting an AMF in the 5GC network, such as, the Globally Unique AMF Identifier ("GUAMI"), the Selected PLMN Identifier ("ID"), the Requested NSSAI and the Establishment cause.

In addition, however, the AN-Params contains a (first) NSWO_Container element, which comprises of a first pseudo-random number (denoted "UNonce") and a first Message Authentication Code (denoted "MAC1"). The MAC1 is created by the UE 201 using a hash function and the MSK stored in the UE 201, e.g., MAC1=Hash(MSK, UNonce). Alternatively, the MAC1 may be created using the hash function and the EMSK stored in the UE 201, e.g., MAC1=Hash(EMSK, UNonce). As used herein, a Message Authentication Code ("MAC") is a cryptographic checksum on data that uses a session key to detect modifications of the data. The Message Authentication Code protects the data integrity and authenticity of the message.

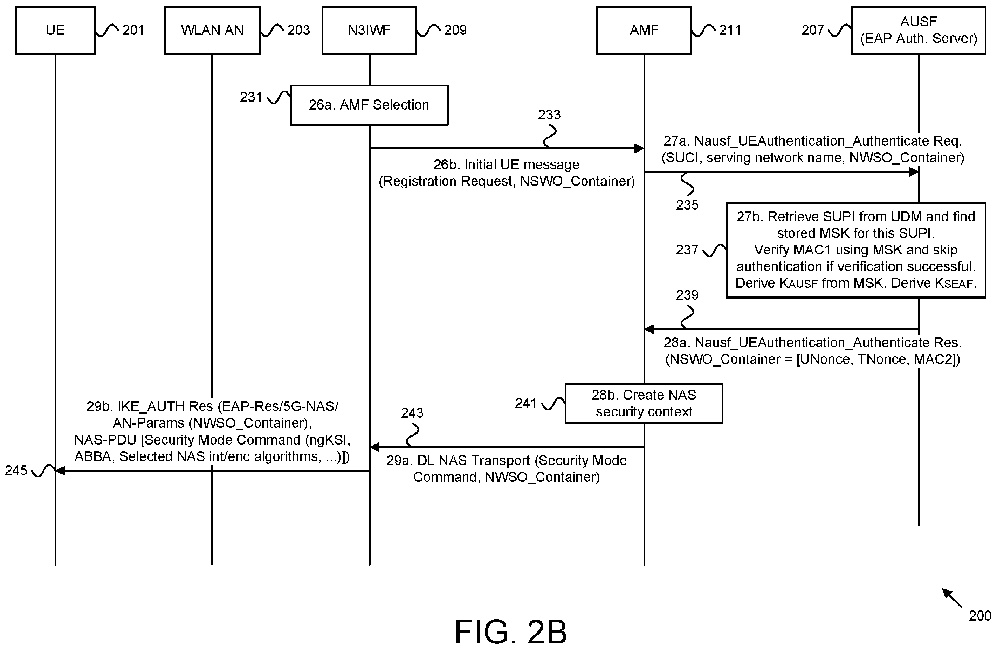

Continuing at Figure 2B, at Step 26, the N3IWF 209 selects an AMF in the 5GC network (see block 231) and sends an Initial UE Message to the selected AMF (i.e., the AMF 211), which contains the Registration Request and the NSWO_Container (see messaging 233).

At Step 27a, the AMF 211 selects an AUSF in the 5GC network and sends to the selected AUSF (i.e., the AUSF 207) a request to authenticate the UE 201 (see messaging 235). This request contains the Subscriber Concealed Identifier ("SUCI") of the UE 201, the Serving Network Name and the NSWO_Container.

At Step 27b, the AUSF 207 retrieves the Subscriber Permanent Identifier ("SUPI") of the UE 201 from the UDM (not shown in Figures 2A-2C) and then identifies the stored MSK key for this SUPI. Recall that the MSK key was created and stored in the AUSF 207 during the NSWO authentication procedure. The AUSF 207 verifies the MAC1 received from the UE 201, e.g., by calculating the Hash(MSK, UNonce) and comparing the result with MAC1 (see block 237).

If the calculated hash matches the MAC1, then the MSK in the UE 201 and the MSK in the AUSF 207 are identical; hence, the UE 201 is authenticated. After successful verification of MAC1, the AUSF 207 may decide to skip the regular authentication procedure (aka "primary authentication") because the UE 201 is authenticated via the provided MAC1 value. In the depicted procedure, it is assumed the MAC1 is successfully verified, and that primary authentication is skipped. In turn, the AUSF 207 derives the KAUSF key from MSK (e.g., by using the 256 most significant bits of MSK) and it also derives the KSEAF key. As described above, the KAUSF key is not generated by the AUSF 207 during the NSWO authentication procedure.

At Step 28a, the AUSF 207 responds to the AMF 211 with a message that contains the SUPI of the UE 201, the KSEAF key and a (second) NSWO_Container element (see messaging 239). The NSWO _Container element provided by the AUSF 207 comprises of the pseudo-random number (denoted "UNonce") created by the UE 201, another pseudo-random number (denoted "TNonce") created by the AUSF 207, and a second Message Authentication Code (denoted "MAC2"). The MAC2 is created by the AUSF 207 using a hash function and the MSK stored in the AUSF 207, e.g., MAC2=Hash(MSK, UNonce, TNonce). Alternatively, the MAC2 may be created using the hash function and the EMSK stored in the AUSF 207, e.g., MAC2=Hash(EMSK, UNonce, TNonce).

At Step 28b, the AMF 211 uses the KSEAF and other information to create the security context for protecting the NAS signaling message exchanged with the UE 201 (see block 241). This security context is referred to as the "NAS security context."

At Step 29a, the AMF 211 sends a DL NAS Transport message to the N3IWF 209 containing a Security Mode Command and the NSWO_Container (see messaging 243). At Step 29b, the N3IWF 209 sends an IKE_AUTH response to the UE 201 (see messaging 245). The IKE_AUTH response sent to the UE 201 includes an EAP-Request/5G-NAS packet that contains the Access Network parameters (AN-Params) and the Security Mode Command message. The AN-Params contains the NSWO_Container element provided by the AUSF 207.

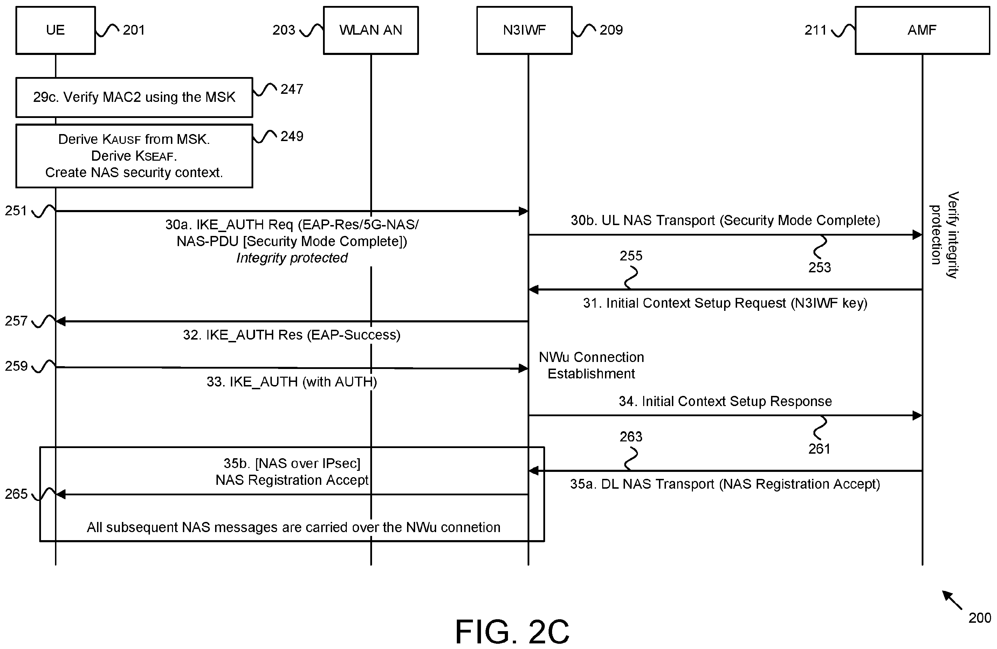

Continuing on Figure 2C, at Step 29c the UE 201 verifies the MAC2 received from the AUSF 207, e.g., by calculating the Hash(MSK, UNonce, TNonce) and comparing the result with MAC2 (see block 247). If they match, then the MSK in the UE 201 and the MSK in the AUSF 207 are identical; hence, the AUSF 207 is authenticated.

After successful verification of MAC2, the UE 201 derives the KSEAF key from MSK (e.g., by using the 256 most significant bits of MSK) and it also derives the KSEAF key. As described above, the KAUSF key is not generated by the UE 201 during the NSWO authentication procedure. In addition, the UE 201 uses the KSEAF and other information contained in the Security Mode Command to create its own NAS security context (see block 249).

At Step 30, the UE 201 creates a Security Mode Complete message and integrity-protects this message by using its own version of the NAS security context. Subsequently, the UE 201 sends this message to AMF 211 via the N3IWF 209 (see messaging 251 and 253). The AMF 211 applies its own version of the NAS security context to verify the integrity of the Security Mode Complete message. If the verification is successful, then both the UE 201 and AMF 211 share the same NAS security context.

At Step 31, the AMF 211 sends to the N3IWF 209 an Initial Context Setup Request message containing an N3IWF key (see messaging 255).

At Step 32, the N3IWF 209 sends to the UE 201 an IKE_AUTH response message containing an EAP-Success notification (see messaging 257).

At Step 33, the UE 201 sends to the N3IWF 209 an IKE_AUTH message containing an AUTH payload, thereby completing establishment of an NWu connection (see messaging 259). Note that the N3IWF 209 and UE 201 establish the IPsec Security Association ("SA") using the N3IWF key.

At Step 34, the N3IWF 209 sends an Initial Context Setup Response message to the AMF 211 (see messaging 261).

At Step 35a, the AMF 211 sends to the N3IWF 209 a DL NAS Transport message containing a NAS Registration Accept message (see messaging 263). At Step 35b, the N3IWF 209 forwards the NAS Registration Accept message to the UE 201 using the IPsec SA (see messaging 265). The procedure 200 ends. All subsequent NAS messages are carried over the established NWu connection.

The UE 201 is now registered to 5GC network via the N3IWF 209 and has established a secure NAS signaling connection with the AMF 211. In an alternative embodiment, instead of using the MSK key in the above procedure 200, the EMSK key could instead be used.

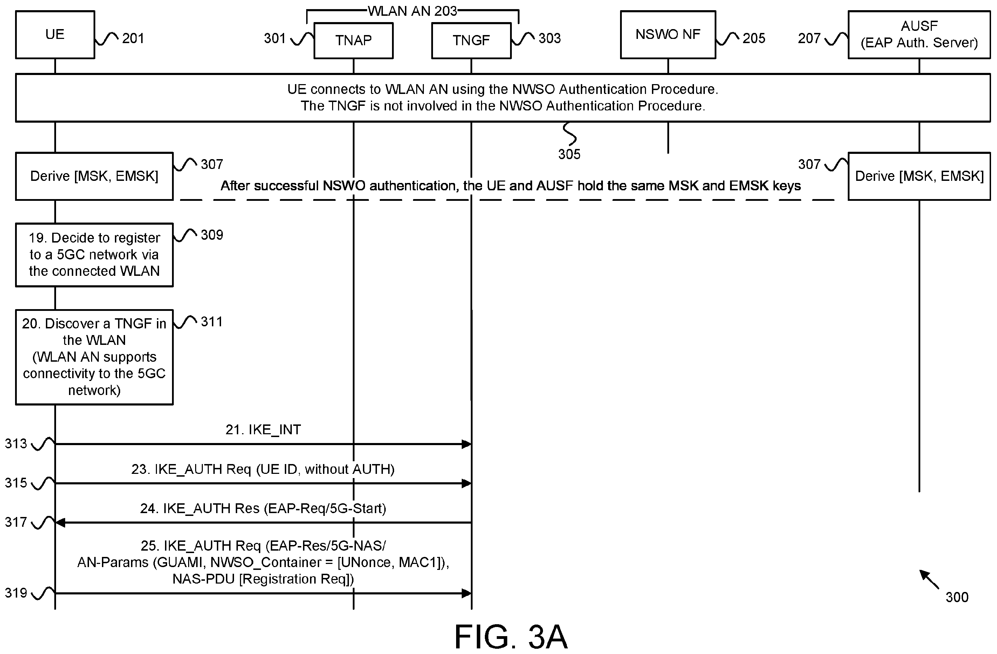

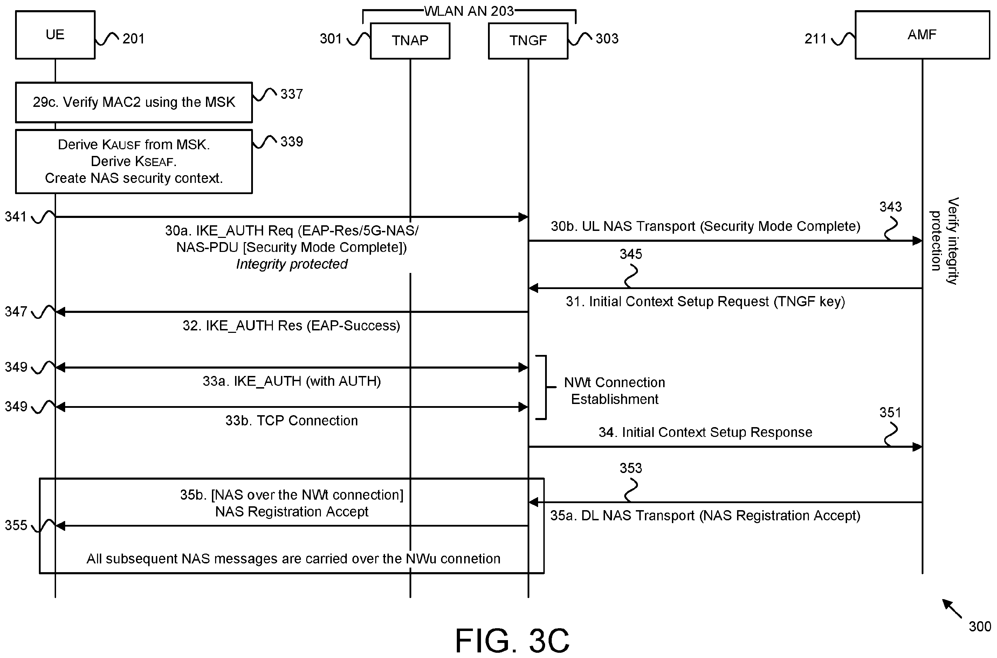

Figures 3A-3C depict a procedure 300 for 5G registration via trusted non-3GPP access after previously performing NSWO authentication, according to embodiments of the disclosure. The procedure 300 involves a UE 201, a WLAN AN 203, a NSWO NF 205, an AUSF 207 (e.g., an EAP authentication server), and a UDM. In the embodiments of Figure 3A-3C, the WLAN AN 203 comprises at least one Trusted Non-3GPP Access Point ("TNAP") 301 and at least one TNGF 303. It is assumed that the UE 201 has connected to a non-3GPP access network 5G credentials and without 5GS registration, e.g., by performing the NSWO authentication procedure described above.

The procedure 300 comprises modifications to the "5G Registration via Trusted non-3GPP Access" procedure specified in 3GPP TS 23.502, clause 4.12a.2.2, where the modifications allow the UE 201 to register with the 5GC network, but without executing an authentication procedure (aka "primary authentication") since the UE 201 was already authenticated by the AUSF 207 in the 5GC network when the NSWO authentication procedure was performed to enable the UE 201 to connect to the WLAN AN 203.

Starting on Figure 3A, the procedure 300 begins as the UE 201 connects to the TNAP 301 using its 5G credentials and the NSWO authentication procedure, e.g., as described above (see block 305). The TNGF 303 is not involved in this procedure. As discussed above, during the NSWO authentication procedure, the UE 201 and the AUSF 207 generate the same MSK (master session key) and the same EMSK (extended master session key) keys (see blocks 307). Also, during the NSWO authentication procedure, a secure connection is established between the UE 201 and the TNGF 303 and the UE 201 can securely exchange data traffic with an external data network, e.g., the data network 160.

At Step 19, while the UE 201 is connected to the TNGF 303, the UE 201 decides to connect to a 5G core ("5GC") network via the WLAN AN 203, e.g., to access a service accessible via the 5GC network (see block 309).

At Step 20, the UE 201 decides to register to the 5GC network via an TNGF 303, i.e., by using the registration via trusted non-3GPP access. How the UE 201 takes this decision depends on the UE implementation logic. In one scenario, the UE 201 decides to register via an TNGF 303 because it determines that the WLAN AN 203 does not support 5G connectivity to the 5GC network. After taking this decision, the UE 201 discovers a TNGF 303 in the WLAN AN 203 (see block 311). The UE 201 decides to discover a TNGF 303 (instead of a N3IWF) because, for example, the UE 201 has identified with known methods that the WLAN AN 203 supports 5G connectivity to the 5GC network, i.e., it operates as a trusted WLAN for this 5GC network.

Note that, based on the existing 3GPP specifications, the UE 201 never needs to discover itself a TNGF in a trusted WLAN, as the TNGF is instead selected by the TNAP. In certain embodiments, the UE 201 discovers the TNGF 303, using Domain Name System ("DNS") procedures, like those applied for N3IWF discovery, or other well-known discovery mechanisms.

At Step 21, the UE 201 establishes an IPsec Security Association ("SA") with the TNGF 303, e.g., by initiating an IKE initial exchange ("IKE _INT") according to IETF RFC 7296 (see messaging 313).

At Step 23, the UE 201 initiates an IKE_AUTH exchange by sending an IKE_AUTH request message (see messaging 315). Note that the IKE_AUTH request message contains a UE ID of the UE 201, but does not contain an AUTH payload.

At Step 24, the TNGF 303 responds with an IKE_AUTH response message, which includes an EAP-Request/5G-Start packet (see messaging 317). The EAP-Request/5G-Start packet triggers the UE 201 to initiate an EAP-5G session, i.e., to start sending NAS messages to the 5GC network encapsulated within EAP-5G packets.

At Step 25, the UE 201 sends an IKE_AUTH request to the TNGF 303, which includes an EAP-Response/5G-NAS packet that contains the Access Network parameters (AN-Params) and a Registration Request message (see messaging 319). Here, the AN-Params contains information that is used by the TNGF 303 for selecting an AMF in the 5GC network, such as, the GUAMI, the Selected PLMN ID, the Requested NSSAI and the Establishment cause.

In addition, however, the AN-Params contains a (first) NSWO_Container element, which comprises of a first pseudo-random number (denoted "UNonce") and a first Message Authentication Code (denoted "MAC1"). The MAC1 is created by the UE 201 using a hash function and the MSK stored in the UE 201, e.g., MAC1=Hash(MSK, UNonce). Alternatively, the MAC1 may be created using the hash function and the EMSK stored in the UE 201, e.g., MAC1=Hash(EMSK, UNonce).

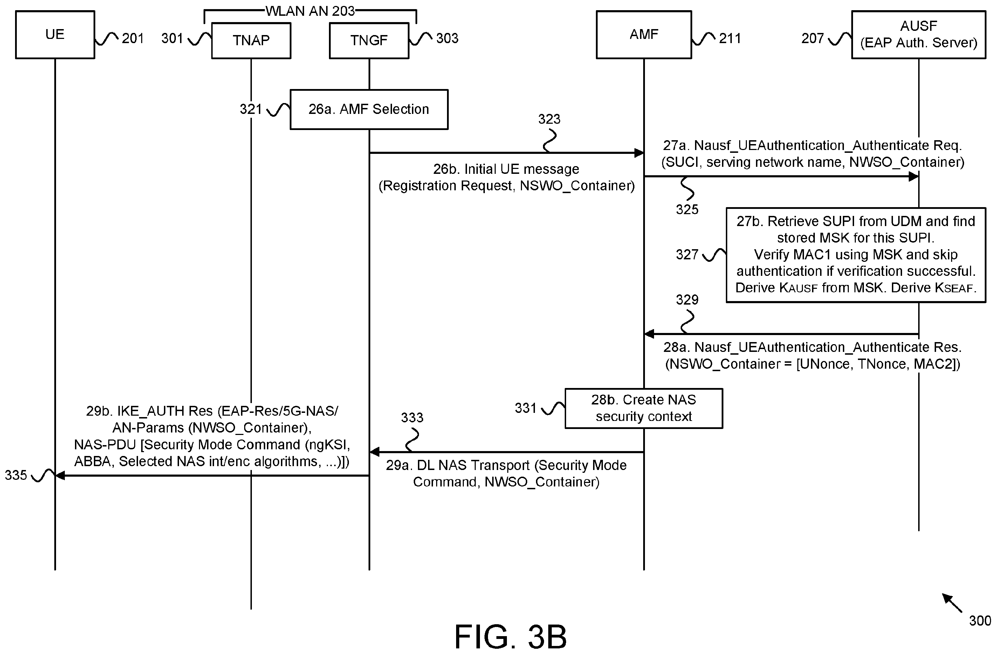

Continuing at Figure 3B, at Step 26, the TNGF 303 selects an AMF in the 5GC network (see block 321) and sends an Initial UE Message to the selected AMF (i.e., the AMF 211), which contains the Registration Request and the NSWO_Container (see messaging 323).

At Step 27a, the AMF 211 selects an AUSF in the 5GC network and sends to the selected AUSF (i.e., the AUSF 207) a request to authenticate the UE 201 (see messaging 325). Thisrequest contains the SUCI of the UE 201, the Serving Network Name and the NSWO_Container.

At Step 27b, the AUSF 207 retrieves the SUPI of the UE 201 from the UDM (not shown in Figures 3A-3C) and then identifies the stored MSK key for this SUPI. Recall that the MSK key was created and stored in the AUSF 207 during the NSWO authentication procedure. The AUSF 207 verifies the MAC1 received from the UE 201, e.g., by calculating the Hash(MSK, UNonce) and comparing the result with MAC1 (see block 327).

If the calculated hash matches the MAC1, then the MSK in the UE 201 and the MSK in the AUSF 207 are identical; hence, the UE 201 is authenticated. After successful verification of MAC1, the AUSF 207 may decide to skip the regular authentication procedure (aka "primary authentication") because the UE 201 is authenticated via the provided MAC1 value. In the depicted procedure, it is assumed the MAC1 is successfully verified and that primary authentication is skipped. In turn, the AUSF 207 derives the KAUSF key from MSK (e.g., by using the 256 most significant bits of MSK) and it also derives the KSEAF key. As described above, the KAUSF key is not generated by the AUSF 207 during the NSWO authentication procedure.

At Step 28a, the AUSF 207 responds to the AMF 211 with a message that contains the SUPI of the UE 201, the KSEAF key and a (second) NSWO_Container element (see messaging 329). The NSWO _Container element provided by the AUSF 207 comprises of the pseudo-random number (denoted "UNonce") created by the UE 201, another pseudo-random number (denoted "TNonce") created by the AUSF 207, and a second Message Authentication Code (denoted "MAC2"). The MAC2 is created by the AUSF 207 using a hash function and the MSK stored in the AUSF 207, e.g., MAC2=Hash(MSK, UNonce, TNonce). Alternatively, the MAC2 may be created using the hash function and the EMSK stored in the AUSF 207, e.g., MAC2=Hash(EMSK, UNonce, TNonce).

At Step 28b, the AMF 211 uses the KSEAF and other information to create the NAS security context for protecting the NAS signaling message exchanged with the UE 201 (see block 331).

At Step 29a, the AMF 211 sends a DL NAS Transport message to the TNGF 303 containing a Security Mode Command and the NSWO_Container (see messaging 333). At Step 29b, the TNGF 303 sends an IKE_AUTH response to the UE 201 (see messaging 335). The IKE_AUTH response sent to the UE 201 includes an EAP-Request/5G-NAS packet that contains the Access Network parameters (AN-Params) and the Security Mode Command message. The AN-Params contains the NSWO_Container element provided by the AUSF 207.

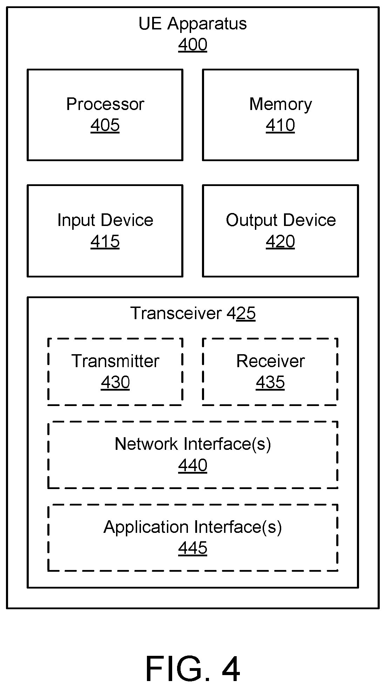

Continuing on Figure 4C, at Step 29c the UE 201 verifies the MAC2 received from the AUSF 207, e.g., by calculating the Hash(MSK, UNonce, TNonce) and comparing the result with MAC2 (see block 337). If they match, then the MSK in the UE 201 and the MSK in the AUSF 207 are identical; hence, the AUSF 207 is authenticated.

After successful verification of MAC2, the UE 201 derives the KSEAF key from MSK (e.g., by using the 256 most significant bits of MSK) and it also derives the KSEAF key. As described above, the KAUSF key is not generated by the UE 201 during the NSWO authentication procedure. In addition, the UE 201 uses the KSEAF and other information contained in the Security Mode Command to create its own NAS security context (see block 339).

At Step 30, the UE 201 creates a Security Mode Complete message and integrity-protects this message by using its own version of the NAS security context. Subsequently, the UE 201 sends this message to AMF 211 via the TNGF 303 (see messaging 341 and 343). The AMF 211 applies its own version of the NAS security context to verify the integrity of the Security Mode Complete message. If the verification is successful, then both the UE 201 and AMF 211 share the same NAS security context.

At Step 31, the AMF 211 sends to the TNGF 303 an Initial Context Setup Request message containing a TNGF key (see messaging 345).

At Step 32, the TNGF 303 sends to the UE 201 an IKE_AUTH response message containing an EAP-Success notification (see messaging 347).

At Step 33, the UE 201 sends to the TNGF 303 an IKE_AUTH message containing an AUTH payload, thereby completing establishment of an NWu connection (see messaging 349). Note that the TNGF 303 and UE 201 establish an IPsec Security Association ("SA") using the TNGF key.

At Step 34, the TNGF 303 sends an Initial Context Setup Response message to the AMF 211 (see messaging 351).

At Step 35a, the AMF 211 sends to the TNGF 303 a DL NAS Transport message containing a NAS Registration Accept message (see messaging 353). At Step 35b, the TNGF 303 forwards the NAS Registration Accept message to the UE 201 using the IPsec SA (see messaging 355). The procedure 300 ends. All subsequent NAS messages are carried over the established NWu connection.

The UE 201 is now registered to 5GC network via the TNGF 303 and has established a secure NAS signaling connection with the AMF 211. In an alternative embodiment, instead of using the MSK key in the above procedure 300, the EMSK key could instead be used.

Figure 4 depicts one embodiment of a UE apparatus 400 that may be used for registering with a core network after NSWO authentication, according to embodiments of the disclosure. The UE apparatus 400 may be one embodiment of the remote unit 105 and/or the UE 201. Furthermore, the UE apparatus 400 may include a processor 405, a memory 410, an input device 415, an output device 420, a transceiver 425.

In some embodiments, the input device 415 and the output device 420 are combined into a single device, such as a touchscreen. In certain embodiments, the UE apparatus 400 may not include any input device 415 and/or output device 420. In various embodiments, the UE apparatus 400 may include one or more of: the processor 405, the memory 410, and the transceiver 425, and may not include the input device 415 and/or the output device 420.

As depicted, the transceiver 425 includes at least one transmitter 430 and at least one receiver 435. In some embodiments, the transceiver 425 communicates with one or more cells (or wireless coverage areas) supported by one or more cellular base units 121 and/or access points 131. In various embodiments, the transceiver 425 is operable on unlicensed spectrum. Moreover, the transceiver 425 may include multiple UE panels supporting one or more beams. Additionally, the transceiver 425 may support at least one network interface 440 and/or application interface 445. The application interface(s) 445 may support one or more APIs. The network interface(s) 440 may support 3GPP reference points, such as Uu, N1, PC5, etc. Other network interfaces 440 may be supported, as understood by one of ordinary skill in the art.

The processor 405, in one embodiment, may include any known controller capable of executing computer-readable instructions and/or capable of performing logical operations. For example, the processor 405 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 405 executes instructions stored in the memory 410 to perform the methods and routines described herein. The processor 405 is communicatively coupled to the memory 410, the input device 415, the output device 420, and the transceiver 425.

In various embodiments, the processor 405 controls the UE apparatus 400 to implement the above described UE behaviors. In certain embodiments, the processor 405 may include an application processor (also known as "main processor") which manages application-domain and operating system ("OS") functions and a baseband processor (also known as "baseband radio processor") which manages radio functions.

In various embodiments, via the transceiver 425, the processor 405 connects to a WLAN AN using credentials (e.g., 5G credentials) associated with a mobile communication network, where connecting to the WLAN AN includes performing a first authentication procedure (e.g., a NSWO authentication procedure) between the UE apparatus 400 and the mobile communication network (i.e., an AUSF), where the first authentication procedure does not register the UE apparatus 400 with the mobile communication network.

The processor 405 determines to register with the mobile communication network after connecting to the WLAN AN and the transceiver sends a first message including a first data container (e.g., an NSWO_Container element), where the first data container is derived based on information (e.g., key material) generated by the UE apparatus 400 during the first authentication procedure, and where the first message initiates registration with the mobile communication network. The transceiver receives a second message including a second data container (e.g., a, NSWO_Container element), where the second data container is derived based on information (e.g., key material) generated by the mobile communication network (e.g., AUSF) during the first authentication procedure. The processor 405 validates the second data container (e.g., using information generated by the UE apparatus 400 during the first authentication procedure) and registers with the mobile communication network based on validating the second data container.

In some embodiments, registering with the mobile communication network based on validating the second data container includes completing the registration upon successful validation without performing primary authentication between the UE apparatus 400 and the mobile communication network. In some embodiments, the WLAN AN is a trusted non-3GPP access network for the mobile communication network.

In some embodiments, the first data container includes a first message authentication code (e.g., MAC1). In certain embodiments, the first message authentication code is derived based on key material (e.g., MSK or EMSK) generated by the UE apparatus 400 during the first authentication procedure. In one embodiment, the key material is a master session key. In another embodiment, the key material is an extended master session key. In certain embodiments, the first data container further includes the first nonce (generated at the UE apparatus 400), where the first message authentication code is derived using the first nonce.

In certain embodiments, the second data container includes a second message authentication code (e.g., MAC2) derived based on key material (e.g., MSK or EMSK) generated by the mobile communication network (e.g., AUSF) during the first authentication procedure. In certain embodiments, the second data container further includes the first nonce (generated at the UE apparatus 400) and a second nonce (generated at the network, i.e., AUSF), where the second message authentication code is derived using the first and second nonces. In various embodiments, the second data container is included in the second message when the network has successfully validated the first data container provided by the UE apparatus 400.

In certain embodiments, validating the second data container includes: A) calculating a first hash using a master session key or an extended master session key; and B) comparing the first hash to the second message authentication code, where the second data container is successfully validated when the first hash matches the second message authentication code.

In some embodiments, the WLAN supports 5G connectivity to the mobile communication network (e.g., a 5GC). In such embodiments, the processor 405 further determines to register with the mobile communication network after connecting to the WLAN AN and discovers a TNGF in response to determining to register with the mobile communication network.

In some embodiments, the WLAN does not support 5G connectivity to the mobile communication network. In such embodiments, the processor 405 further determines to register with the mobile communication network after connecting to the WLAN AN and discovers a N3IWF in response to determining to register with the mobile communication network.

The memory 410, in one embodiment, is a computer readable storage medium. In some embodiments, the memory 410 includes volatile computer storage media. For example, the memory 410 may include a RAM, including dynamic RAM ("DRAM"), synchronous dynamic RAM ("SDRAM"), and/or static RAM ("SRAM"). In some embodiments, the memory 410 includes non-volatile computer storage media. For example, the memory 410 may include a hard disk drive, a flash memory, or any other suitable non-volatile computer storage device. In some embodiments, the memory 410 includes both volatile and non-volatile computer storage media.

In some embodiments, the memory 410 stores data related to establishing a multipath unicast link and/or mobile operation. For example, the memory 410 may store various parameters, panel/beam configurations, resource assignments, policies, and the like as described above. In certain embodiments, the memory 410 also stores program code and related data, such as an operating system or other controller algorithms operating on the UE apparatus 400.

The input device 415, in one embodiment, may include any known computer input device including a touch panel, a button, a keyboard, a stylus, a microphone, or the like. In some embodiments, the input device 415 may be integrated with the output device 420, for example, as a touchscreen or similar touch-sensitive display. In some embodiments, the input device 415 includes a touchscreen such that text may be input using a virtual keyboard displayed on the touchscreen and/or by handwriting on the touchscreen. In some embodiments, the input device 415 includes two or more different devices, such as a keyboard and a touch panel.

The output device 420, in one embodiment, is designed to output visual, audible, and/or haptic signals. In some embodiments, the output device 420 includes an electronically controllable display or display device capable of outputting visual data to a user. For example, the output device 420 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 420 may include a wearable display separate from, but communicatively coupled to, the rest of the UE apparatus 400, such as a smart watch, smart glasses, a heads-up display, or the like. Further, the output device 420 may be a component of a smart phone, a personal digital assistant, a television, a table computer, a notebook (laptop) computer, a personal computer, a vehicle dashboard, or the like.

In certain embodiments, the output device 420 includes one or more speakers for producing sound. For example, the output device 420 may produce an audible alert or notification (e.g., a beep or chime). In some embodiments, the output device 420 includes one or more haptic devices for producing vibrations, motion, or other haptic feedback. In some embodiments, all or portions of the output device 420 may be integrated with the input device 415. For example, the input device 415 and output device 420 may form a touchscreen or similar touch-sensitive display. In other embodiments, the output device 420 may be located near the input device 415.

The transceiver 425 communicates with one or more network functions of a mobile communication network via one or more access networks. The transceiver 425 operates under the control of the processor 405 to transmit messages, data, and other signals and also to receive messages, data, and other signals. For example, the processor 405 may selectively activate the transceiver 425 (or portions thereof) at particular times in order to send and receive messages.

The transceiver 425 includes at least transmitter 430 and at least one receiver 435. One or more transmitters 430 may be used to provide UL communication signals to a cellular base unit 121 and/or an access point 131, such as the UL transmissions described herein. Similarly, one or more receivers 435 may be used to receive DL communication signals from the cellular base unit 121 and/or an access point 131, as described herein. Although only one transmitter 430 and one receiver 435 are illustrated, the UE apparatus 400 may have any suitable number of transmitters 430 and receivers 435. Further, the transmitter(s) 430 and the receiver(s) 435 may be any suitable type of transmitters and receivers. In one embodiment, the transceiver 425 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 425, transmitters 430, and receivers 435 may be implemented as physically separate components that access a shared hardware resource and/or software resource, such as for example, the network interface 440.

In various embodiments, one or more transmitters 430 and/or one or more receivers 435 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 430 and/or one or more receivers 435 may be implemented and/or integrated into a multi-chip module. In some embodiments, other components such as the network interface 440 or other hardware components/circuits may be integrated with any number of transmitters 430 and/or receivers 435 into a single chip. In such embodiment, the transmitters 430 and receivers 435 may be logically configured as a transceiver 425 that uses one more common control signals or as modular transmitters 430 and receivers 435 implemented in the same hardware chip or in a multi-chip module.

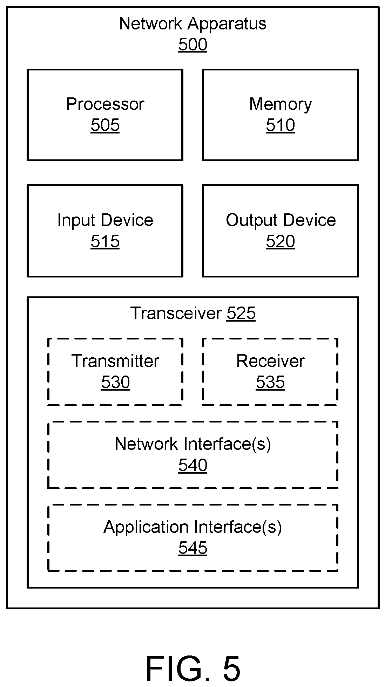

Figure 5 depicts one embodiment of a network apparatus 500 that may be used for registering with a core network after NSWO authentication, according to embodiments of the disclosure. In some embodiments, the network apparatus 500 may implement an interworking entity, such as an N3IWF and/or TNGF. In further embodiments, the network apparatus 500 may implement an AUSF. Furthermore, the network apparatus 500 may include a processor 505, a memory 510, an input device 515, an output device 520, a transceiver 525.

In some embodiments, the input device 515 and the output device 520 are combined into a single device, such as a touchscreen. In certain embodiments, the network apparatus 500 may not include any input device 515 and/or output device 520. In various embodiments, the network apparatus 500 may include one or more of: the processor 505, the memory 510, and the transceiver 525, and may not include the input device 515 and/or the output device 520.

As depicted, the transceiver 525 includes at least one transmitter 530 and at least one receiver 535. Here, the transceiver 525 communicates with one or more remote units 105. Additionally, the transceiver 525 may support at least one network interface 540 and/or application interface 545. The application interface(s) 545 may support one or more APIs. The network interface(s) 540 may support 3GPP reference points, such as Uu, N1, N2 and N3. Other network interfaces 540 may be supported, as understood by one of ordinary skill in the art.

The processor 505, in one embodiment, may include any known controller capable of executing computer-readable instructions and/or capable of performing logical operations. For example, the processor 505 may be a microcontroller, a microprocessor, a CPU, a GPU, an auxiliary processing unit, a FPGA, or similar programmable controller. In some embodiments, the processor 505 executes instructions stored in the memory 510 to perform the methods and routines described herein. The processor 505 is communicatively coupled to the memory 510, the input device 515, the output device 520, and the transceiver 525.

In various embodiments, the network apparatus 500 is a RAN node (e.g., gNB) that communicates with one or more UEs, as described herein. In such embodiments, the processor 505 controls the network apparatus 500 to perform the above described RAN behaviors. When operating as a RAN node, the processor 505 may include an application processor (also known as "main processor") which manages application-domain and operating system ("OS") functions and a baseband processor (also known as "baseband radio processor") which manages radio functions.

In some embodiments, via the transceiver 525, the processor 505 performs a first authentication procedure (e.g., an NSWO authentication procedure) between a UE and the network apparatus 500, where the first authentication procedure does not register the UE with the mobile communication network. The transceiver 525 receives a first message including a first data container (e.g., an NSWO_Container element), where the first data container is derived based on information (e.g., key material) generated by the UE during the first authentication procedure, and where the first message is sent to register the UE with the mobile communication network.

The processor 505 validates the first data container (e.g., using information generated by the network apparatus 500 during the first authentication procedure) and the transceiver 525 transmits a second message including a second data container (e.g., an NSWO_Container element) based on validating the first data container, where the second data container is derived based on information (e.g., key material) generated by the network apparatus 500 during the first authentication procedure.

The processor 505 and transceiver 525 further register the UE with the mobile communication network. In some embodiments, registering the UE with the mobile communication network includes completing the registration without performing primary authentication between the network apparatus 500 and the UE.

In some embodiments, the first data container includes a first message authentication code (e.g., MAC1), the first message authentication code being derived based on the key material (e.g., MSK or EMSK) generated by the UE during the first authentication procedure. In certain embodiments, validating the first data container includes: A) calculating a first hash using one or both of: a master session key or an extended master session key; and B) comparing the first hash to the first message authentication code, where the first data container is successfully validated when the first hash matches the first message authentication code. In certain embodiments, the first data container further includes the first nonce (generated at the UE), where the first message authentication code is derived using the first nonce.

In some embodiments, the second data container includes a second message authentication code (e.g., MAC2) derived based on the key material (e.g., MSK or EMSK) generated by the network apparatus 500 during the first authentication procedure. In one embodiment, the key material includes a master session key. In another embodiment, the key material includes an extended master session key. In certain embodiments, the second data container further includes the first nonce (generated at the UE) and a second nonce (generated at the network apparatus 500), where the second message authentication code is derived using the first and second nonces. In various embodiments, the second data container is included in the second message if the network apparatus 500 has successfully validated the first data container provided by the UE.

The memory 510, in one embodiment, is a computer readable storage medium. In some embodiments, the memory 510 includes volatile computer storage media. For example, the memory 510 may include a RAM, including dynamic RAM ("DRAM"), synchronous dynamic RAM ("SDRAM"), and/or static RAM ("SRAM"). In some embodiments, the memory 510 includes non-volatile computer storage media. For example, the memory 510 may include a hard disk drive, a flash memory, or any other suitable non-volatile computer storage device. In some embodiments, the memory 510 includes both volatile and non-volatile computer storage media.

In some embodiments, the memory 510 stores data related to establishing a multipath unicast link and/or mobile operation. For example, the memory 510 may store parameters, configurations, resource assignments, policies, and the like, as described above. In certain embodiments, the memory 510 also stores program code and related data, such as an operating system or other controller algorithms operating on the network apparatus 500.

The input device 515, in one embodiment, may include any known computer input device including a touch panel, a button, a keyboard, a stylus, a microphone, or the like. In some embodiments, the input device 515 may be integrated with the output device 520, for example, as a touchscreen or similar touch-sensitive display. In some embodiments, the input device 515 includes a touchscreen such that text may be input using a virtual keyboard displayed on the touchscreen and/or by handwriting on the touchscreen. In some embodiments, the input device 515 includes two or more different devices, such as a keyboard and a touch panel.

The output device 520, in one embodiment, is designed to output visual, audible, and/or haptic signals. In some embodiments, the output device 520 includes an electronically controllable display or display device capable of outputting visual data to a user. For example, the output device 520 may include, but is not limited to, an LCD display, an LED display, an OLED display, a projector, or similar display device capable of outputting images, text, or the like to a user. As another, non-limiting, example, the output device 520 may include a wearable display separate from, but communicatively coupled to, the rest of the network apparatus 500, such as a smart watch, smart glasses, a heads-up display, or the like. Further, the output device 520 may be a component of a smart phone, a personal digital assistant, a television, a table computer, a notebook (laptop) computer, a personal computer, a vehicle dashboard, or the like.

In certain embodiments, the output device 520 includes one or more speakers for producing sound. For example, the output device 520 may produce an audible alert or notification (e.g., a beep or chime). In some embodiments, the output device 520 includes one or more haptic devices for producing vibrations, motion, or other haptic feedback. In some embodiments, all or portions of the output device 520 may be integrated with the input device 515. For example, the input device 515 and output device 520 may form a touchscreen or similar touch-sensitive display. In other embodiments, the output device 520 may be located near the input device 515.

The transceiver 525 includes at least transmitter 530 and at least one receiver 535. One or more transmitters 530 may be used to communicate with the UE, as described herein. Similarly, one or more receivers 535 may be used to communicate with network functions in the PLMN and/or RAN, as described herein. Although only one transmitter 530 and one receiver 535 are illustrated, the network apparatus 500 may have any suitable number of transmitters 530 and receivers 535. Further, the transmitter(s) 530 and the receiver(s) 535 may be any suitable type of transmitters and receivers.

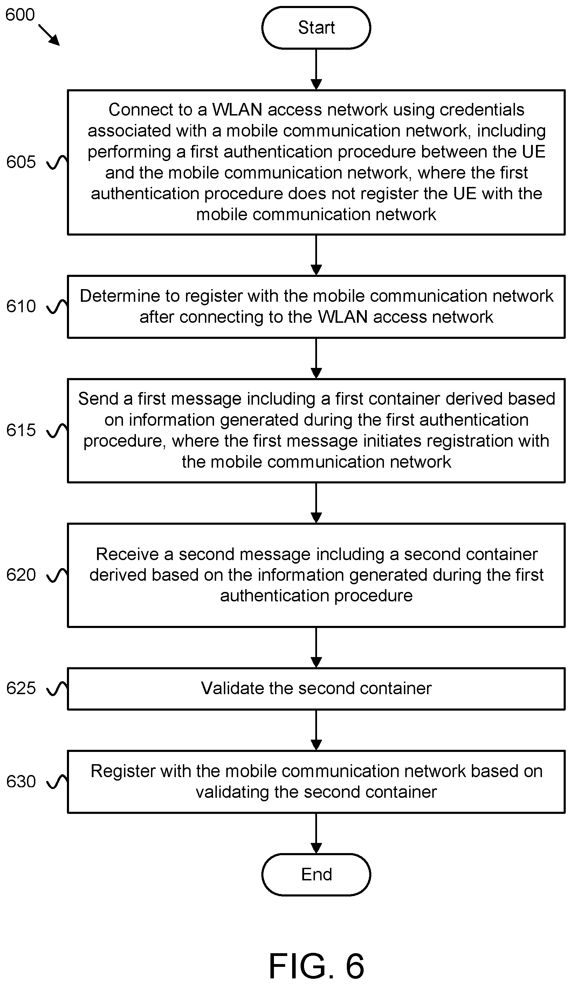

Figure 6 depicts one embodiment of a method 600 for registering with a core network after NSWO authentication, according to embodiments of the disclosure. In various embodiments, the method 600 is performed by a UE, such as the remote unit 105, the UE 201, and/or the UE apparatus 400, described above as described above. In some embodiments, the method 600 is performed by a processor, such as a microcontroller, a microprocessor, a CPU, a GPU, an auxiliary processing unit, a FPGA, or the like.

The method 600 begins and connects 605 to a WLAN AN using credentials (e.g., 5G credentials) associated with a mobile communication network, where connecting to the WLAN AN includes performing a first authentication procedure (e.g., a NSWO authentication procedure) between the UE and the mobile communication network, where the first authentication procedure does not register the UE with the mobile communication network. The method 600 includes determining 610 to register with the mobile communication network after connecting to the WLAN AN. The method 600 includes sending 615 a first message including a first container (e.g., an NSWO_Container element), where the first container is derived based on information (e.g., key material) generated during the first authentication procedure, and where the first message initiates registration with the mobile communication network.

The method 600 includes receiving 620 a second message including a second container (e.g., an NWSO_Container element), where the second container is derived based on the information (e.g., key material) generated during the first authentication procedure. The method includes validating 625 the second container (e.g., using information generated by the UE during the first authentication procedure). The method 600 includes registers 630 with the mobile communication network based on validating the second container. The method 600 ends.

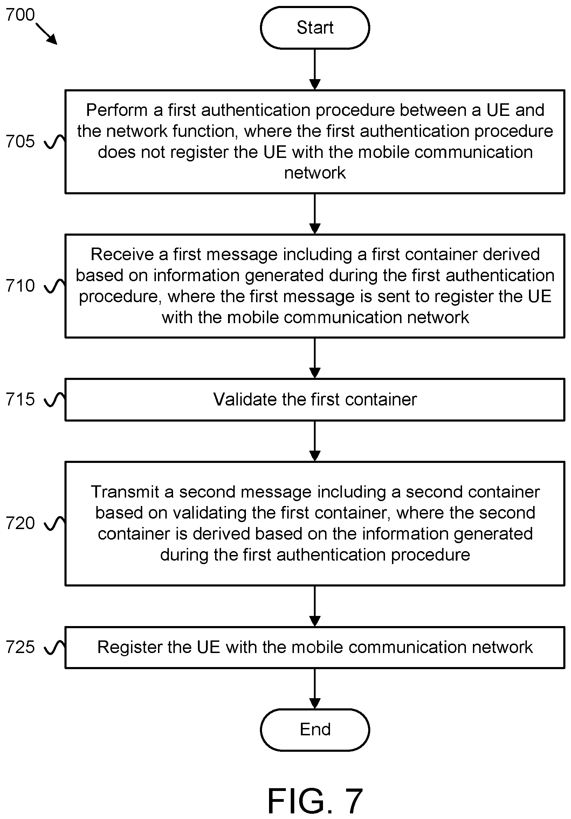

Figure 7 depicts one embodiment of a method 700 for registering with a core network after NSWO authentication, according to embodiments of the disclosure. In various embodiments, the method 700 is performed by a network function in a mobile communication network, such as the AUSF 148, the AUSF 207, and/or the network apparatus 500, described above as described above. In some embodiments, the method 700 is performed by a processor, such as a microcontroller, a microprocessor, a CPU, a GPU, an auxiliary processing unit, a FPGA, or the like.

The method 700 begins and performs 705 a first authentication procedure (e.g., an NSWO authentication procedure) between a UE and the network function, where the first authentication procedure does not register the UE with the mobile communication network. The method 700 includes receiving 710 a first message including a first container (e.g., an NSWO_Container element), where the first container is derived based on information (e.g., key material) generated during the first authentication procedure, and where the first message is sent to register the UE with the mobile communication network.

The method 700 includes validating 715 the first container (e.g., using information generated by the network function during the first authentication procedure). The method 700 includes transmitting 720 a second message including a second container (e.g., an NWSO_Container element) based on validating the first container, where the second container is derived based on the information (e.g., MSK or EMSK) generated during the first authentication procedure. The method 700 includes registering 725 the UE with the mobile communication network. The method 700 ends.

Disclosed herein is a first apparatus for registering with a core network after NSWO authentication, according to embodiments of the disclosure. The first apparatus may be implemented by a UE, such as the remote unit 105, the UE 201, and/or the UE apparatus 400, described above. The first apparatus includes a processor coupled to a transceiver, the processor configured to cause the first apparatus to connect to a WLAN AN using credentials (e.g., 5G credentials) associated with a mobile communication network, where connecting to the WLAN AN includes performing a first authentication procedure (e.g., a NSWO authentication procedure) between the first apparatus and the mobile communication network, where the first authentication procedure does not register the first apparatus with the mobile communication network.

The processor determines to register with the mobile communication network after connecting to the WLAN AN and the transceiver sends a first message including a first container (e.g., an NSWO_Container element), where the first container is derived based on information (e.g., key material) generated by the first apparatus during the first authentication procedure, and where the first message initiates registration with the mobile communication network. The transceiver receives a second message including a second container (e.g., an NSWO_Container element), where the second container is derived based on the information (e.g., key material) generated by the mobile communication network (e.g., AUSF) during the first authentication procedure. The processor validates the second container (e.g., using information generated by the first apparatus during the first authentication procedure) and registers with the mobile communication network based on validating the second container.

In some embodiments, to register with the mobile communication network, the processor is configured to cause the apparatus to register with the mobile communication network without performing primary authentication between the first apparatus and the mobile communication network. In some embodiments, the WLAN AN is a trusted non-3GPP access network for the mobile communication network.

In some embodiments, the first container includes a first authentication code (e.g., a message authentication code). In certain embodiments, the processor is further configured to: A) generate one or both of a master session key or an extended master session key during the first authentication procedure and B) derive the first authentication code based on one or both of the master session key or the extended master session key.

In certain embodiments, the second container includes a second message authentication code (e.g., a message authentication code). In certain embodiments, to validate the second container, the processor is configured to cause the first apparatus to: A) calculate a first hash using one or both of a master session key or an extended master session key; and B) compare the first hash to the second authentication code, where the second container is successfully validated when the first hash matches the second authentication code.

In some embodiments, the WLAN AN supports 5G connectivity to the mobile communication network (e.g., a 5GC). In such embodiments, the processor is further configured to cause the first apparatus to: A) determine to register with the mobile communication network after connecting to the WLAN AN; and B) discover a TNGF in response to determining to register with the mobile communication network.

In some embodiments, the WLAN AN does not support 5G connectivity to the mobile communication network. In such embodiments, the processor is further configured to cause the first apparatus to: A) determine to register with the mobile communication network after connecting to the WLAN AN; and B) discover a N3IWF in response to determining to register with the mobile communication network.

Disclosed herein is a first method for registering with a core network after NSWO authentication, according to embodiments of the disclosure. The first method may be performed by a UE, such as the remote unit 105, the UE 201, and/or the UE apparatus 400, described above. The first method includes connecting to a WLAN AN using credentials (e.g., 5G credentials) associated with a mobile communication network, where connecting to the WLAN AN includes performing a first authentication procedure (e.g., a NSWO authentication procedure) between the UE and the mobile communication network, where the first authentication procedure does not register the UE with the mobile communication network.

The first method includes determining to register with the mobile communication network after connecting to the WLAN AN and sending a first message including a first container (e.g., an NSWO_Container element), where the first container is derived based on information (e.g., key material) generated by the UE during the first authentication procedure, and where the first message initiates registration with the mobile communication network. The first method includes receiving a second message including a second container (e.g., an NSWO_Container element), where the second container is derived based on the information (e.g., key material) generated by the mobile communication network (e.g., AUSF) during the first authentication procedure. The first method includes validating the second container (e.g., using information generated by the UE during the first authentication procedure) and registers with the mobile communication network based on validating the second container.

In some embodiments, registering with the mobile communication network includes registering with the mobile communication network without performing primary authentication between the UE and the mobile communication network. In some embodiments, the WLAN AN is a trusted non-3GPP access network for the mobile communication network.

In some embodiments, the first container includes a first authentication code (e.g., a message authentication code). In certain embodiments, the first method further includes A) generating one or both of a master session key or an extended master session key during the first authentication procedure, and B) deriving the first authentication code based on one or both of the master session key or the extended master session key.

In certain embodiments, the second container includes a second authentication code (e.g., message authentication code). In certain embodiments, validating the second container includes: A) calculating a first hash using one or both of a master session key or an extended master session key; and B) comparing the first hash to the second authentication code, where the second container is successfully validated when the first hash matches the second authentication code.

In some embodiments, the WLAN AN supports 5G connectivity to the mobile communication network (e.g., a 5GC). In such embodiments, the first method includes: A) determining to register with the mobile communication network after connecting to the WLAN AN; and B) discovering a TNGF in response to determining to register with the mobile communication network.

In some embodiments, the WLAN AN does not support 5G connectivity to the mobile communication network. In such embodiments, the first method includes: A) determining to register with the mobile communication network after connecting to the WLAN AN; and B) discovering a N3IWF in response to determining to register with the mobile communication network.

Disclosed herein is a second apparatus for registering with a core network after NSWO authentication, according to embodiments of the disclosure. The second apparatus may be implemented by a network function, such as the AUSF 148, the AUSF 207, and/or the network apparatus 500, described above. The second apparatus includes a processor coupled to a transceiver, the processor configured to cause the second apparatus to perform a first authentication procedure (e.g., an NSWO authentication procedure) between a UE and the second apparatus, where the first authentication procedure does not register the UE with the mobile communication network. The transceiver receives a first message including a first container (e.g., an NSWO_Container element), where the first container is derived based on information (e.g., key material) generated by the UE during the first authentication procedure, and where the first message is sent to register the UE with the mobile communication network.

The processor validates the first container (e.g., using information generated by the second apparatus during the first authentication procedure) and the transceiver transmits a second message including a second container (e.g., an NSWO_Container element) based on validating the first container, where the second container is derived based on the information (e.g., key material) generated by the second apparatus during the first authentication procedure.

The processor further registers the UE with the mobile communication network. In some embodiments, to register the UE with the mobile communication network, the processor is configured to cause the apparatus to register the UE with the mobile communication network without performing primary authentication between the second apparatus and the UE.

In some embodiments, the first container includes a first authentication code (e.g., a message authentication code). In certain embodiments, to validate the first container, the processor is configured to cause the second apparatus to: A) calculate a first hash using one or both of a master session key or an extended master session key; and B) compare the first hash to the first authentication code, where the first container is successfully validated when the first hash matches the first authentication code.

In some embodiments, the second container includes a second message authentication code derived based on the key material generated by the second apparatus during the first authentication procedure, the key material including a master session key or an extended master session key.

Disclosed herein is a second method for registering with a core network after NSWO authentication, according to embodiments of the disclosure. The second method may be performed by a network function, such as the AUSF 148, the AUSF 207, and/or the network apparatus 500, described above. The second method includes performing a first authentication procedure (e.g., an NSWO authentication procedure) between a UE and the network function, where the first authentication procedure does not register the UE with the mobile communication network. The second method includes receiving a first message including a first container (e.g., an NSWO_Container element), where the first container is derived based on information (e.g., key material) generated by the UE during the first authentication procedure, and where the first message is sent to register the UE with the mobile communication network.

The second method includes validating the first container (e.g., using information generated by the network function during the first authentication procedure) and transmitting a second message including a second container based on validating the first container, where the second container is derived based on the information (e.g., key material) generated by the network function during the first authentication procedure.

The second method includes registering the UE with the mobile communication network. In some embodiments, registering the UE with the mobile communication network includes registering the UE with the mobile communication network without performing primary authentication between the network function and the UE.

In some embodiments, the first container includes a first authentication code(e.g., MAC1). In certain embodiments, validating the first container includes: A) calculating a first hash using one of: a master session key and an extended master session key; and B) comparing the first hash to the first authentication code, where the first container is successfully validated when the first hash matches the first authentication code.

In some embodiments, the second container includes a second message authentication code derived based on the key material generated by the network function during the first authentication procedure, the key material including a master session key or an extended master session key.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A user equipment, UE, (105, 201, 400) for wireless communication, the UE (105, 201, 400) comprising:
a processor (405) configured to cause the UE (105, 201, 400) to:
connect (215) to a wireless local area network, WLAN, access network, AN, (203) using credentials associated with a mobile communication network, wherein connecting to the WLAN AN (203) comprises performing a first authentication procedure between the UE (105, 201, 400) and the mobile communication network, wherein the first authentication procedure does not register the UE (105, 201, 400) with the mobile communication network;
determine (219) to register with the mobile communication network after connecting to the WLAN AN (203);
send (229) a first message including a first container, wherein the first container is derived based on information generated by the UE (105, 201, 400) during the first authentication procedure, and wherein the first message initiates registration with the mobile communication network;
receive (245) a second message including a second container, wherein the second container is derived based on the information generated by the mobile communication network during the first authentication procedure;
validate (247) the second container; and
register with the mobile communication network based on validating the second container.

2. The UE (105, 201, 400) of claim 1, wherein, to register with the mobile communication network, the processor (405) is configured to cause the UE (105, 201, 400) to register with the mobile communication network without performing primary authentication between the UE (105, 201, 400) and the mobile communication network.

3. The UE (105, 201, 400) of claim 1 or 2, wherein the first container comprises a first authentication code.

4. The UE (105, 201, 400) of claim 3, wherein the processor (405) is further configured to cause the UE (105, 201, 400) to:
generate one or both of a master session key or an extended master session key during the first authentication procedure; and
derive the first authentication code based on one or both of the master session key or the extended master session key.

5. The UE (105, 201, 400) of claim 3 or 4, wherein the second container comprises a second authentication code.

6. The UE (105, 201, 400) of claim 5, wherein, to validate the second container, the processor (405) is configured to cause the UE (105, 201, 400) to:
calculate a first hash using one or both of: a master session key and an extended master session key; and
compare the first hash to the second authentication code, wherein the second container is successfully validated when the first hash matches the second authentication code.

7. The UE (105, 201, 400) of any preceding claim, wherein the WLAN AN (203) supports 5G connectivity to the mobile communication network, and wherein the processor (405) is further configured to cause the UE (105, 201, 400) to determine to register with the mobile communication network after connecting to the WLAN AN (203) and to discover a trusted non-3GPP gateway function, TNGF, in response to determining to register with the mobile communication network.

8. The UE (105, 201, 400) of any preceding claim, wherein the WLAN AN (203) does not support 5G connectivity to the mobile communication network, and wherein the processor (405) is further configured to cause the UE (105, 201, 400) to determine to register with the mobile communication network after connecting to the WLAN AN (203) and to discover a non-3GPP interworking function, N3IWF, in response to determining to register with the mobile communication network.

9. The UE (105, 201, 400) of any preceding claim, wherein the WLAN AN (203) is a trusted non-3GPP access network for the mobile communication network.

10. A method performed by a User Equipment, UE, (105, 201), the method comprising:
connecting (215) to a wireless local area network, WLAN, access network, AN, (203) using credentials associated with a mobile communication network, wherein connecting to the WLAN AN (203) comprises performing a first authentication procedure between the UE (105, 201) and the mobile communication network, wherein the first authentication procedure does not register the UE (105, 201) with the mobile communication network;
determining (219) to register with the mobile communication network after connecting to the WLAN AN (203);
sending (229) a first message including a first container, wherein the first container is derived based on information generated during the first authentication procedure, and wherein the first message initiates registration with the mobile communication network;
receiving (245) a second message including a second container, wherein the second container is derived based on the information generated during the first authentication procedure;
validating (247) the second container; and
registering with the mobile communication network based on validating the second container.

11. A network apparatus (500) in a mobile communication network, the network apparatus (500) comprising:
a processor (505) configured to cause the network apparatus (500) to:
perform (215) a first authentication procedure between a User Equipment, UE, (105, 201) and the network apparatus (500), wherein the first authentication procedure does not register the UE (105, 201) with the mobile communication network;
receive (229) a first message including a first container, wherein the first container is derived based on information generated during the first authentication procedure, and wherein the first message is sent to register the UE (105, 201) with the mobile communication network;
validate the first container; and
transmit (245) a second message including a second container based on validating the first container, wherein the second container is derived based on the information generated during the first authentication procedure; and
register the UE (105, 201) with the mobile communication network.

12. The network apparatus (500) of claim 11, wherein, to register the UE (105, 201) with the mobile communication network, the processor (505) is configured to cause the network apparatus (500) to register the UE (105, 201) with the mobile communication network without performing primary authentication between the UE (105, 201) and the network apparatus (500).

13. The network apparatus (500) of claim 11 or 12, wherein the first container comprises a first authentication code.

14. The network apparatus (500) of claim 13, wherein, to validate the first container, the processor (505) is configured to cause the network apparatus (500) to:
calculate a first hash using one or both of a master session key or an extended master session key during the first authentication procedure; and
compare the first hash to the first authentication code, wherein the first container is successfully validated when the first hash matches the first authentication code.

15. The network apparatus (500) of any of claims 11 to 14, wherein the second container comprises a second authentication code, and wherein the processor (505) is further configured to cause the network apparatus (500) to:
generate one or both of a master session key or an extended master session key during the first authentication procedure; and
derive the second authentication code based on one or both of the master session key or the extended master session key.

## Patentansprüche

1. Teilnehmergerät, UE, (105, 201, 400) zur drahtlosen Kommunikation, wobei das UE (105, 201, 400) umfasst:
einen Prozessor (405), der dazu konfiguriert ist, das UE (105, 201, 400) zu veranlassen zum:
Verbinden (215) mit einem Zugangsnetzwerk, AN, (203), eines drahtlosen lokalen Netzwerks, WLAN, unter Verwendung von Zugangsdaten, die mit einem Mobilkommunikationsnetzwerk assoziiert sind, wobei das Verbinden mit dem WLAN-AN (203) ein Durchführen eines ersten Authentifizierungsvorgangs zwischen dem UE (105, 201, 400) und dem Mobilkommunikationsnetzwerk umfasst, wobei der erste Authentifizierungsvorgang das UE (105, 201, 400) nicht mit dem Mobilkommunikationsnetzwerk registriert;
Bestimmen (219), sich nach dem Verbinden mit dem WLAN-AN (203) mit dem Mobilkommunikationsnetzwerk zu registrieren;
Senden (229) einer ersten Nachricht, die einen ersten Container einschließt, wobei der erste Container auf der Basis von Informationen abgeleitet wird, die während des ersten Authentifizierungsvorgangs von dem UE (105, 201, 400) erzeugt werden, und wobei die erste Nachricht eine Registrierung mit dem Mobilkommunikationsnetzwerk initiiert;
Empfangen (245) einer zweiten Nachricht, die einen zweiten Container einschließt, wobei der zweite Container auf der Basis der Informationen abgeleitet wird, die während des ersten Authentifizierungsvorgangs von dem Mobilkommunikationsnetzwerk erzeugt werden;
Validieren (247) des zweiten Containers; und
Registrieren mit dem Mobilkommunikationsnetzwerk auf der Basis des Validierens des zweiten Containers.

2. UE (105, 201, 400) nach Anspruch 1, wobei der Prozessor (405) dazu konfiguriert ist, zum Registrieren mit dem Mobilkommunikationsnetzwerk das UE (105, 201, 400) zu veranlassen, sich ohne Durchführen einer primären Authentifizierung zwischen dem UE (105, 201, 400) und dem Mobilkommunikationsnetzwerk mit dem Mobilkommunikationsnetzwerk zu registrieren.

3. UE (105, 201, 400) nach Anspruch 1 oder 2, wobei der erste Container einen ersten Authentifizierungscode umfasst.

4. UE (105, 201, 400) nach Anspruch 3, wobei der Prozessor (405) ferner dazu konfiguriert ist, das UE (105, 201, 400) zu veranlassen zum:
Erzeugen eines oder beider von einem Master-Sitzungsschlüssel oder einem erweiterten Master-Sitzungsschlüssel während des ersten Authentifizierungsvorgangs; und
Ableiten des ersten Authentifizierungscodes auf der Basis von einem oder beiden von dem Master-Sitzungsschlüssel oder dem erweiterten Master-Sitzungsschlüssel.

5. UE (105, 201, 400) nach Anspruch 3 oder 4, wobei der zweite Container einen zweiten Authentifizierungscode umfasst.

6. UE (105, 201, 400) nach Anspruch 5, wobei der Prozessor (405) dazu konfiguriert ist, zum Validieren des zweiten Containers das UE (105, 201, 400) zu veranlassen zum:
Berechnen eines ersten Hashs unter Verwendung eines oder beider von: einem Master-Sitzungsschlüssel und einem erweiterten Master-Sitzungsschlüssel; und
Vergleichen des ersten Hashs mit dem zweiten Authentifizierungscode, wobei der zweite Container erfolgreich validiert wird, wenn der Hash mit dem zweiten Authentifizierungscode übereinstimmt.

7. UE (105, 201, 400) nach einem vorhergehenden Anspruch, wobei das WLAN-AN (203) 5G-Konnektivität zu dem Mobilkommunikationsnetzwerk unterstützt, und wobei der Prozessor (405) ferner dazu konfiguriert ist, das UE (105, 201, 400) zu veranlassen, zu bestimmen, sich nach dem Verbinden mit dem WLAN-AN (203) mit dem Mobilkommunikationsnetzwerk zu registrieren und eine vertrauenswürdige Nicht-3GPP-Gateway-Funktion, TNGF, als Reaktion auf das Bestimmen, sich mit dem Mobilkommunikationsnetzwerk zu registrieren, zu entdecken.

8. UE (105, 105.201.400, 400) nach einem vorhergehenden Anspruch, wobei das WLAN-AN (203) 5G-Konnektivität zu dem Mobilkommunikationsnetzwerk nicht unterstützt, und wobei der Prozessor (405) ferner dazu konfiguriert ist, das UE (105, 201, 400) zu veranlassen, zu bestimmen, sich nach dem Verbinden mit dem WLAN-AN (203) mit dem Mobilkommunikationsnetzwerk zu registrieren und eine Nicht-3GPP-Interworking-Funktion, N3IWF, als Reaktion auf das Bestimmen, sich mit dem Mobilkommunikationsnetzwerk zu registrieren, zu entdecken.

9. UE (105, 201, 400) nach einem vorhergehenden Anspruch, wobei das WLAN-AN (203) ein vertrauenswürdiges Nicht-3GPP-Zugangsnetzwerk für das Mobilkommunikationsnetzwerk ist.

10. Verfahren, das von einem Teilnehmergerät, UE, (105, 201) durchgeführt wird, wobei das Verfahren umfasst:
Verbinden (215) mit einem Zugangsnetzwerk, AN, (203), eines drahtlosen lokalen Netzwerks, WLAN, unter Verwendung von Zugangsdaten, die mit einem Mobilkommunikationsnetzwerk assoziiert sind, wobei das Verbinden mit dem WLAN-AN (203) ein Durchführen eines ersten Authentifizierungsvorgangs zwischen dem UE (105, 201) und dem Mobilkommunikationsnetzwerk umfasst, wobei der erste Authentifizierungsvorgang das UE (105, 201) nicht mit dem Mobilkommunikationsnetzwerk registriert;
Bestimmen (219), sich nach dem Verbinden mit dem WLAN-AN (203) mit dem Mobilkommunikationsnetzwerk zu registrieren;
Senden (229) einer ersten Nachricht, die einen ersten Container einschließt, wobei der erste Container auf der Basis von Informationen abgeleitet wird, die während des ersten Authentifizierungsvorgangs erzeugt werden, und wobei die erste Nachricht eine Registrierung mit dem Mobilkommunikationsnetzwerk initiiert;
Empfangen (245) einer zweiten Nachricht, die einen zweiten Container einschließt, wobei der zweite Container auf der Basis der Informationen abgeleitet wird, die während des ersten Authentifizierungsvorgangs erzeugt werden;
Validieren (247) des zweiten Containers; und
Registrieren mit dem Mobilkommunikationsnetzwerk auf der Basis des Validierens des zweiten Containers.

11. Netzwerkvorrichtung (500) in einem Mobilkommunikationsnetzwerk, wobei die Netzwerkvorrichtung (500) umfasst:
einen Prozessor (505), der dazu konfiguriert ist, die Netzwerkvorrichtung (500) zu veranlassen zum:
Durchführen (215) eines ersten Authentifizierungsvorgangs zwischen einem Teilnehmergerät, UE, (105, 201) und der Netzwerkvorrichtung (500), wobei der erste Authentifizierungsvorgang das UE (105, 201) nicht mit dem Mobilkommunikationsnetzwerk registriert;
Empfangen (229) einer ersten Nachricht, die einen ersten Container einschließt, wobei der erste Container auf der Basis von Informationen abgeleitet wird, die während des ersten Authentifizierungsvorgangs erzeugt werden, und wobei die erste Nachricht gesendet wird, um das UE (105, 201) mit dem Mobilkommunikationsnetzwerk zu registrieren;
Validieren des ersten Containers; und
Übertragen (245) einer zweiten Nachricht, die einen zweiten Container einschließt, auf der Basis des Validierens des ersten Containers, wobei der zweite Container auf der Basis der Informationen abgeleitet wird, die während des ersten Authentifizierungsvorgangs erzeugt werden; und
Registrieren des UE (105, 201) mit dem Mobilkommunikationsnetzwerk.

12. Netzwerkvorrichtung (500) nach Anspruch 11, wobei der Prozessor (505) dazu konfiguriert ist, zum Registrieren des UE (105, 201) mit dem Mobilkommunikationsnetzwerk die Netzwerkvorrichtung (500) zu veranlassen, das UE (105, 201) ohne Durchführen einer primären Authentifizierung zwischen dem **UE** (105, 201) und der Netzwerkvorrichtung (500) mit dem Mobilkommunikationsnetzwerk zu registrieren.

13. Netzwerkvorrichtung (500) nach Anspruch **11** oder 12, wobei der erste Container einen ersten Authentifizierungscode umfasst.

14. Netzwerkvorrichtung (500) nach Anspruch 13, wobei der Prozessor (505) dazu konfiguriert ist, zum Validieren des ersten Containers die Netzwerkvorrichtung (500) zu veranlassen zum:
Berechnen eines ersten Hashs unter Verwendung eines oder beider von einem Master-Sitzungsschlüssel oder einem erweiterten Master-Sitzungsschlüssel während des ersten Authentifizierungsvorgangs; und
Vergleichen des ersten Hashs mit dem ersten Authentifizierungscode, wobei der erste Container erfolgreich validiert wird, wenn der Hash mit dem ersten Authentifizierungscode übereinstimmt.

15. Netzwerkvorrichtung (500) nach einem der Ansprüche **11** bis 14, wobei der zweite Container einen zweiten Authentifizierungscode umfasst, und wobei der Prozessor (505) ferner dazu konfiguriert ist, die Netzwerkvorrichtung (500) zu veranlassen zum:
Erzeugen eines oder beider von einem Master-Sitzungsschlüssel oder einem erweiterten Master-Sitzungsschlüssel während des ersten Authentifizierungsvorgangs; und
Ableiten des zweiten Authentifizierungscodes auf der Basis von einem oder beiden von dem Master-Sitzungsschlüssel oder dem erweiterten Master-Sitzungsschlüssel.

## Revendications

1. Équipement utilisateur, UE, (105, 102, 400) pour communication sans fil, l'UE (105, 102, 400) comprenant :
un processeur (405) configuré pour amener l'UE (105, 201, 400) à :
se connecter (215) à un réseau (203) d'accès à un réseau local sans fil, WLAN AN (pour « wireless local area network access network ») à l'aide d'un justificatif d'identité associé à un réseau de communication mobile, la connexion au WLAN AN (203) comprenant la réalisation d'une première procédure d'authentification entre l'UE (105, 201, 400) et le réseau de communication mobile, la première procédure d'authentification n'enregistrant pas l'UE (105, 201, 400) auprès du réseau de communication mobile ;
déterminer (219) de s'enregistrer auprès du réseau de communication mobile après la connexion au WLAN AN (203) ;
envoyer (229) un premier message comprenant un premier conteneur, le premier conteneur étant dérivé sur la base d'informations générées par l'UE (105, 201, 400) pendant la première procédure d'authentification, et le premier message initiant l'enregistrement auprès du réseau de communication mobile ;
recevoir (245) un second message comprenant un second conteneur, le second conteneur étant dérivé sur la base des informations générées par le réseau de communication mobile pendant la première procédure d'authentification ;
valider (247) le second conteneur ; et
s'enregistrer auprès du réseau de communication mobile sur la base de la validation du second conteneur.

2. UE (105, 201, 400) selon la revendication 1, dans lequel, pour s'enregistrer auprès du réseau de communication mobile, le processeur (405) est configuré pour amener l'UE (105, 201, 400) à s'enregistrer auprès du réseau de communication mobile sans réaliser d'authentification principale entre l'UE (105, 201, 400) et le réseau de communication mobile.

3. UE (105, 201, 400) selon la revendication 1 ou 2, dans lequel le premier conteneur comprend un premier code d'authentification.

4. UE (105, 201, 400) selon la revendication 3, dans lequel le processeur (405) est en outre configuré pour amener l'UE (105, 201, 400) à :
générer l'une ou les deux parmi une clé de session maîtresse et une clé de session maîtresse étendue, pendant la première procédure d'authentification ; et
dériver le premier code d'authentification sur la base de l'une ou des deux parmi la clé de session maîtresse et la clé de session maîtresse étendue.

5. UE (105, 201, 400) selon la revendication 3 ou 4, dans lequel le second conteneur comprend un second code d'authentification.

6. UE (105, 201, 400) selon la revendication 5, dans lequel, pour valider le second conteneur, le processeur (405) est configuré pour amener l'UE (105, 201, 400) à :
calculer un premier hachage à l'aide de l'une ou des deux parmi : une clé de session maîtresse et une clé de session maîtresse étendue ; et
comparer le premier hachage au second code d'authentification, le deuxième conteneur étant validé avec succès lorsque le premier hachage correspond au second code d'authentification.

7. UE (105, 201, 400) selon une quelconque revendication précédente, dans lequel le WLAN AN (203) prend en charge la connectivité 5G au réseau de communication mobile, et dans lequel le processeur (405) est en outre configuré pour amener l'UE (105, 201, 400) à déterminer de s'enregistrer auprès du réseau de communication mobile après s'être connecté au WLAN AN (203) et à découvrir une fonction de passerelle non 3GPP de confiance, TNGF (pour « trusted non-3GPP gateway function »), en réponse à la détermination de s'enregistrer auprès du réseau de communication mobile.

8. UE (105, 201, 400) selon une quelconque revendication précédente, dans lequel le WLAN AN (203) ne prend pas en charge la connectivité 5G au réseau de communication mobile, et dans lequel le processeur (405) est en outre configuré pour amener l'UE (105, 201, 400) à déterminer de s'enregistrer auprès du réseau de communication mobile après s'être connecté au WLAN AN (203) et à découvrir une fonction d'interfonctionnement non-3GPP, N3IWF (pour « non-3GPP interworking function »), en réponse à la détermination de s'enregistrer auprès du réseau de communication mobile.

9. UE (105, 201, 400) selon une quelconque revendication précédente, dans lequel le WLAN AN (203) est un réseau d'accès non-3GPP de confiance pour le réseau de communication mobile.

10. Procédé réalisé par un équipement utilisateur, UE, (105, 201), le procédé comprenant :
la connexion (215) à un réseau d'accès (203) à un réseau local sans fil, WLAN AN (pour « wireless local area network access network ») à l'aide d'un justificatif d'identité associé à un réseau de communication mobile, la connexion au WLAN AN (203) comprenant la réalisation d'une première procédure d'authentification entre l'UE (105, 201) et le réseau de communication mobile, la première procédure d'authentification n'enregistrant pas l'UE (105, 201) auprès du réseau de communication mobile ;
la détermination (219) de s'enregistrer auprès du réseau de communication mobile après la connexion au WLAN AN (203) ;
l'envoi (229) d'un premier message comprenant un premier conteneur, le premier conteneur étant dérivé sur la base d'informations générées pendant la première procédure d'authentification, et le premier message initiant l'enregistrement auprès du réseau de communication mobile ;
la réception (245) d'un second message comprenant un second conteneur, le second conteneur étant dérivé sur la base des informations générées pendant la première procédure d'authentification ;
la validation (247) du second conteneur ; et
l'enregistrement auprès du réseau de communication mobile sur la base de la validation du second conteneur.

11. Appareil réseau (500) dans un réseau de communication mobile, l'appareil réseau (500) comprenant :
un processeur (505) configuré pour amener l'appareil réseau (500) à :
réaliser (215) une première procédure d'authentification entre un équipement utilisateur, UE, (105, 201) et l'appareil réseau (500), la première procédure d'authentification n'enregistrant pas l'UE (105, 201) auprès du réseau de communication mobile ;
recevoir (229) un premier message comprenant un premier conteneur, le premier conteneur étant dérivé sur la base d'informations générées pendant la première procédure d'authentification, et le premier message étant envoyé pour enregistrer l'UE (105, 201) auprès du réseau de communication mobile ;
valider le premier conteneur ; et
transmettre (245) un second message comprenant un second conteneur sur la base de la validation du premier conteneur, le second conteneur étant dérivé sur la base des informations générées pendant la première procédure d'authentification ; et
enregistrer l'UE (105, 201) auprès du réseau de communication mobile.

12. Appareil réseau (500) selon la revendication 11, dans lequel, pour enregistrer l'UE (105, 201) auprès du réseau de communication mobile, le processeur (505) est configuré pour amener l'appareil réseau (500) à enregistrer l'UE (105, 201) auprès du réseau de communication mobile sans réaliser d'authentification principale entre l'UE (105, 201) et l'appareil réseau (500).

13. Appareil réseau (500) selon la revendication 11 ou 12, dans lequel le premier conteneur comprend un premier code d'authentification.

14. Appareil réseau (500) selon la revendication 13, dans lequel, pour valider le second conteneur, le processeur (505) est configuré pour amener l'appareil réseau (500) à :
calculer un premier hachage à l'aide de l'une ou des deux parmi une clé de session maîtresse et une clé de session maîtresse étendue, pendant la première procédure d'authentification ; et
comparer le premier hachage au premier code d'authentification, le premier conteneur étant validé avec succès lorsque le premier hachage correspond au premier code d'authentification.

15. Appareil réseau (500) selon l'une quelconque des revendications 11 à 14, dans lequel le second conteneur comprend un second code d'authentification, et dans lequel le processeur (505) est en outre configuré pour amener l'appareil réseau (500) à :
générer l'une ou les deux parmi une clé de session maîtresse et une clé de session maîtresse étendue, pendant la première procédure d'authentification ; et
dériver le second code d'authentification sur la base de l'une ou des deux parmi la clé de session maîtresse et la clé de session maîtresse étendue.
